(19) Europäisches Patentamt
European Patent Office
Office européen des brevets

(11) **EP 4 716 092 A1**

(12) **EUROPEAN PATENT APPLICATION**
published in accordance with Art. 153(4) EPC

(43) Date of publication:
**25.03.2026 Bulletin 2026/13**

(51) International Patent Classification (IPC):
***H02P 21/22*** *(2016.01)*

(21) Application number: **24806998.1**

(52) Cooperative Patent Classification (CPC):
**H02P 21/22**

(22) Date of filing: **23.04.2024**

(86) International application number:
**PCT/JP2024/015931**

(87) International publication number:
**WO 2024/237044 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.05.2023  JP 2023080089**

(71) Applicant: **DENSO CORPORATION**
**Kariya-city, Aichi 448-8661 (JP)**

(72) Inventors:
• **WASHIO, Sho**
**Nisshin-city, Aichi 4700111 (JP)**
• **KAZAOKA, Ryoya**
**Kariya-city, Aichi 4488661 (JP)**

(74) Representative: **TBK**
**Bavariaring 4-6**
**80336 München (DE)**

(54) **CONTROL DEVICE AND CONTROL PROGRAM FOR ROTARY ELECTRIC MACHINE SYSTEM**

(57)     A control device (40) is applied to a rotary electric machine system including a rotary electric machine (10) having polyphase winding (11) and an inverter (20) that adjusts the phase current of each phase in the winding, and performs power control of the rotary electric machine using the inverter. The control device (40) includes a current setting unit that sets phase current command values for each phase of the winding based on an electrical angle of the rotary electric machine and a d-axis current command value and a q-axis current command value of the rotary electric machine, a current control unit that controls the phase current flowing through each phase based on the phase current command values set by the current setting unit, and a determination unit that determines whether a heat generation request is present in the rotary electric machine system. When it is determined that a heat generation request is present and the rotary electric machine is in a rotational stop state, the current setting unit sets an AC d-axis current as the d-axis current command value in order to pass a phase current that alternates on both positive and negative sides through each phase of the winding, and sets a phase current command value based on the AC d-axis current.

FIG.1

**Description**

[Cross-Reference to Related Applications]

The present application is based on and claims the benefit of priority from earlier Japanese Patent Application No. 2023-080089 filed on May 15, 2023, contents of which are incorporated herein by reference.

[Technical Field]

The present disclosure relates to a control device and control program for a rotary electric machine system.

[Background Art]

As described in Patent Literature 1, a control device for an inverter that electrically connects windings and a battery constituting a rotary electric machine is known. This control device alternately repeats discharge control, which applies d-axis voltage via inverter switching control to supply d-axis current to the rotary electric machine when the battery is at low temperature and the rotary electric machine is stopped, and charging control, which follows discharge control by lowering the d-axis voltage to return electrical energy from the coils of the rotary electric machine to the battery. This causes Joule heat to be generated in the battery, raising the temperature of the battery.

[Citation List]

[Patent Literature]

[PTL 1] JP 5849917 B1

[Summary of the Invention]

According to the technology described in the above-mentioned Patent Literature 1, when the battery is at a low temperature and the rotary electric machine is stopped, a d-axis current flows on either the positive or negative side due to application of the d-axis voltage. In this case, the inverter performs switching control on switches of some phases among all phases, and this causes phase currents to flow in a specific direction through the phase windings of each phase of the rotary electric machine. However, in the above configuration, current concentrates on the switches of only some phases among all phases, resulting in the current flowing through the inverter being limited due to thermal limitations at those switches. Therefore, the amount of heat generated decreases, and it is thought that there may be cases where a sufficient amount of heat cannot be generated to satisfy heat generation request (demand to generate heat).

The present disclosure has been made in consideration of the above-mentioned problems, and has as its main object to efficiently generate heat in a rotary electric machine system.

Means for solving the above problems are as follows:

A control device applied to a rotary electric machine system including a rotary electric machine having a polyphase winding and an inverter for adjusting phase current of each phase in the winding, and performing power control of the rotary electric machine using the inverter, the control device including:

a current setting unit that sets phase current command values for each phase of the winding based on an electrical angle of the rotary electric machine and a d-axis current command value and a q-axis current command value of the rotary electric machine,

a current control unit that controls the phase current flowing through each phase based on the phase current command values set by the current setting unit, and

a determination unit that determines a presence or absence of a heat generation request in the rotary electric machine system, wherein

when it is determined that the heat generation request is present and the rotary electric machine is in a rotational stop state, the current setting unit sets an AC d-axis current as the d-axis current command value in order to pass a phase current that alternates on both positive and negative sides through each phase of the winding, and the current setting unit sets the phase current command value based on the AC d-axis current.

When it is determined that a heat generation request in the rotary electric machine system is present and the rotary electric machine is in a rotational stop state, the AC d-axis current is set as the d-axis current command value to supply an AC phase current that alternates on both positive and negative sides through each phase of the winding, and based on this AC d-axis current, it is configured that the phase current command values for each phase are set. According to this configuration, the phase current command values set for each phase based on the AC d-axis current cause phase currents that vary alternately in both positive and negative sides to flow in all phases, and switching control is performed on all phase switches within the inverter. Therefore, switching operation across all phases generates heat, enabling the inverter to generate more heat compared to when switching occurs only in some phases. In addition, when heat generation occurs only in certain phases by switching control, heat generation control may be restricted due to certain switches becoming overheated; however, this drawback can be mitigated. As a result, efficient heat generation can be achieved in the rotary electric machine system.

It should be noted that a heat generation means to produce heat, and a heat generation request means to require the production of heat.

[Brief Description of the Drawings]

The above features of the present disclosure will be made clearer by the following detailed description, given referring to the appended drawings. In the accompanying drawings:

Fig. 1 shows an overall configuration of a rotary electric machine system;
Fig. 2 shows a schematic diagram of a switch drive circuit;
Figs. 3A, 3B and 3C show timing charts of changes in switch voltage Vsw and switch current Isw;
Fig. 4 shows a timing chart of a rise in element temperature during switch-on;
Fig. 5 shows a diagram of a dq-UVW transformation process;
Fig. 6 shows timing charts of current waveforms for a dq-axis current and phase currents of each phase;
Figs. 7A and 7B show switching patterns when performing heat generation control by d-axis energization;
Figs. 8A and 8B show switching patterns when performing heat generation control by d-axis energization;
Figs. 9A, 9B and 9C show timing charts of gate voltage transitions at upper and lower arm switches;
Fig. 10 shows a timing chart of an example of controlling switching of gate resistance in each phase;
Fig. 11 shows a relationship between an electrical angle and a current ratio for each phase;
Figs. 12A, 12B and 12C show timing charts of switching control of three states with different modulation rates;
Figs. 13A and 13B show diagrams of dq-UVW transformation processes;
Fig. 14 shows a timing chart for specifically explaining heat generation control by d-axis current application.;
Fig. 15 shows a flowchart of a heat generation control procedure while a vehicle is stopped;
Fig. 16 shows a flowchart of heat generation control procedure while the vehicle is running;
Fig. 17 shows a relationship between the element temperature and the length of a loss increase period;
Fig. 18 shows a diagram of a meshing of gears in a gear device;
Fig. 19 shows timing charts of changes in various parameters when generating q-axis torque;
Fig. 20 shows a flowchart of heat generation control procedure while the vehicle is stopped;
Fig. 21 shows a timing chart of a gate voltage transition at the upper and lower arm switches; and
Fig. 22 shows a configuration diagram for changing a dead time in response to a heat generation request.

[Description of the Embodiments]

(First Embodiment)

Hereinafter, a rotary electric machine system according to an embodiment will be described with reference to the drawings. The rotary electric machine system in the present embodiment is installed in electric vehicles such as battery electric vehicles (BEVs) and hybrid electric vehicles (HEVs).

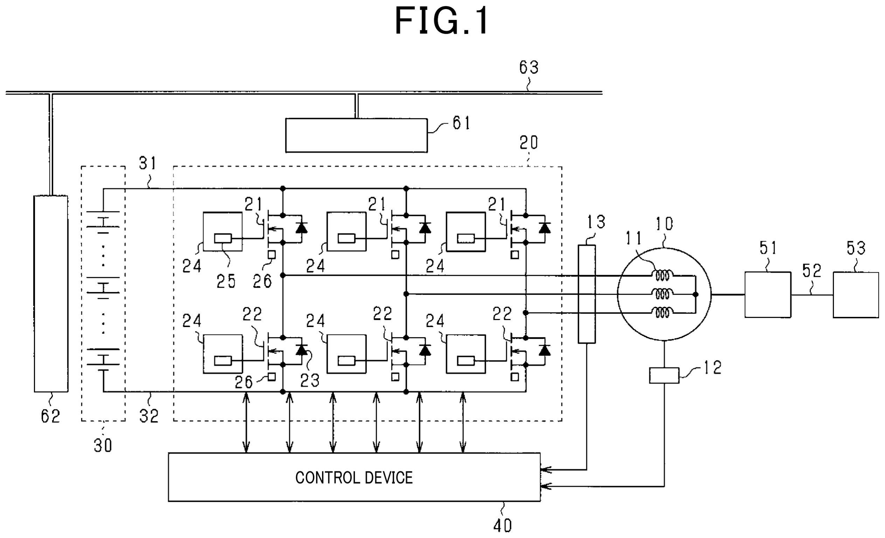

As shown in fig 1, a rotary electric machine system includes a rotary electric machine 10, an inverter 20 serving as a power converter, a battery 30 as a high-voltage power source, and a control device 40. The rotary electric machine 10 is a brushless synchronous machine, and is a permanent magnet synchronous machine in the present embodiment. The rotary electric machine 10 includes a rotor (not shown) and stator windings consisting of three-phase coils 11 (U-phase, V-phase, W-phase). The coils 11 are composed of a U-phase coil, a V-phase coil, and a W-phase coil connected in a star configuration. The rotary electric machine 10 includes a rotation angle sensor 12 for detecting a rotation angle (an electrical angle) of the rotor and a phase current sensor 13 for detecting a phase current flowing through each phase of the coils 11. The phase current sensor 13 may be provided for each of the three phases. However, the phase current sensor 13 may be provided for only two of the three phases.

The rotary electric machine 10 is provided as a power source for the vehicle, and wheels are rotated and driven by the rotation of the rotor. In the present embodiment, the rotation of the rotor of the rotary electric machine 10 is transmitted to an input shaft of a gear device 51, and the rotation of an output shaft of the gear device 51 is transmitted to a wheel 53 via an axle 52.

The inverter 20 includes a series-connected assembly of an upper arm switch 21 and a lower arm switch 22 for each phase. The switches 21 and 22 of the upper and lower arms are semiconductor switching elements, such as N-channel MOSFETs. For each switch 21, 22, a terminal on aa high-potential side is a drain, and a terminal on a low-potential side is a source. Each switch 21, 22 (semiconductor switching element) has a diode 23 connected in reverse parallel as a freewheeling diode. In each phase, a midpoint between the upper arm switch 21 and the lower arm switch 22 is connected to a terminal of the coil 11 of the rotary electric machine 10. Note that the semiconductor switching element may be an IGBT or the like.

A drive circuit 24 is connected to a gate of each switch 21, 22, and the drive circuit 24 turns switches 21, 22 on and off based on drive commands from the control device 40. The drive circuit 24 is equipped with a short-circuit detection unit 25 that detects when a short circuit occurs in the switches 21 and 22 of the upper and lower arms, respectively. The short-circuit detection unit 25 detects an overcurrent flowing due to a short circuit between the upper and lower arms, and upon detecting this overcurrent, forcibly disconnects the switches 21 and 22. Each switch 21, 22 is equipped with an element temperature sensor 26 that detects the temperature of the semiconductor switching element.

The battery 30 is a secondary battery such as a lithium-ion battery or a nickel-metal hydride battery. The battery 30 is a battery pack including, for example, a series-connected assembly of a plurality of battery cells. The drain of each phase upper arm switch 21 is connected to a positive terminal of the battery 30 via a high-potential side path 31. The source of each phase lower arm switch 22 is connected to a negative terminal of the battery 30 via a low-potential side path 32.

In addition, the rotary electric machine system includes heat transfer sections 61 and 62 provided respectively on the inverter 20 and the battery 30, and the respective heat transfer sections 61 and 62 are interconnected by a refrigerant passage 63 formed by piping and the like. In the heat transfer section 61 on the inverter 20 side, heat transfer occurs between each switch 21, 22 of the inverter 20 and the refrigerant flowing through the refrigerant passage 63. Further, in the heat transfer section 62 on the battery 30 side, heat transfer occurs between the battery 30 and the refrigerant flowing through the refrigerant passage 63. In this case, if a temperature difference exists between the inverter 20 and the battery 30, heat exchange occurs between the inverter 20 and the battery 30 via the refrigerant flowing through the refrigerant passage 63. Note that although not shown in the drawings, the refrigerant passage 63 is provided as a circulation path for circulating the refrigerant, and the refrigerant passage 63 includes a pump for circulating the refrigerant and a heat dissipation component such as a radiator.

The control device 40 is mainly composed of a microcomputer, and the microcomputer includes a CPU. The functions provided by the microcomputer can be provided by software stored in a substantive memory device and the computer that executes it, by software alone, by hardware alone, or by a combination thereof. For example, if the microcomputer is provided by an electronic circuit that is hardware, it can be provided by a digital or analog circuit that contains many logic circuits. For example, the microcomputer may execute a program stored in a non-transitory tangible storage medium as its own storage unit. The program includes programs for processing of various arithmetic operations. When the program is executed, the method corresponding to the program is performed. The memory unit may be, for example, a nonvolatile memory. Note that the programs stored in the storage unit can be updated via communication networks such as the internet, for example, through OTA (over the air).

The control unit 40 receives detection signals from various sensors, including the rotation angle sensor 12, the phase current sensor 13, and the element temperature sensor 26. The control device 40 performs switching control of each switch 21, 22 constituting the inverter 20 based on the input detection values, in order to control the control quantity (e.g., torque) of the rotary electric machine 10 to the command value. In this case, PWM pulses are generated using a well-known PWM control method, and each switch 21, 22 is switched. This causes the rotor of the rotary electric machine 10 to rotate, enabling the vehicle to run.

The control device 40 sets command values for a d-axis current and a q-axis current based on the command torque, etc. of the rotary electric machine 10, for example during vehicle is running, and acquires an electrical angle θ (rotation angle) detected by the rotation angle sensor 12. In addition, based on the current command values and the electrical angle θ, phase current command values for each phase are calculated. Then, switching control of each of the switches 21, 22 in the inverter 20 is performed by current feedback control based on the detected current detected by the phase current sensor 13 and the phase current command values.

In the battery 30, which consists of secondary batteries such as lithium-ion storage batteries, degradation is more likely to occur at low temperatures, and it is desirable to use them at temperatures suitable for each type. Therefore, it is desirable to perform a process that raises the battery temperature when the battery 30 is in a low-temperature state. In addition, in vehicles, besides the thermal demand for battery heating, there is also thermal demand for cabin heating and other purposes. Considering this point, in the present embodiment, the configuration is such that a heat generation control is performed when a heat generation request arises to promote heat generation in the rotary electric machine system, that is, when a request to generate heat occurs within the For example, when the battery temperature is low, a heat generation request is sent to the control device 40 from the higher-level control device or other external devices, and the control device 40 performs a heat generation control.

In the present embodiment, heat generation control is broadly categorized into two types of control, and one is a heat generation control due to increased switching losses in each switch 21, 22 of the inverter 20. Another one is a heat generation control achieved by applying the d-axis current to the rotary electric machine 10 during the vehicle is stopped (when the rotary electric machine 10 stops rotating), thereby preventing torque generation in the motor. Each of heat generation controls will be described in detail below. First, heat generation control due to increased switching losses will be explained.

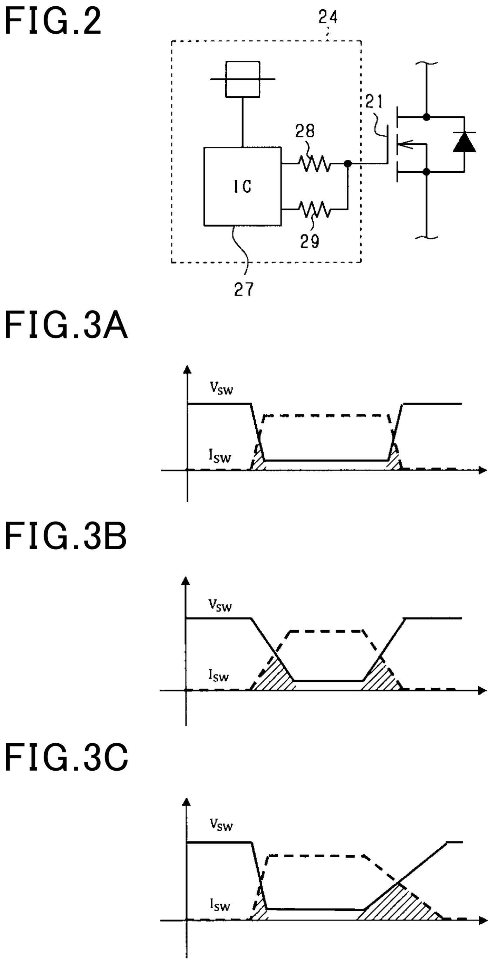

Fig. 2 shows a configuration of the drive circuit 24 for the switch 21 in the inverter 20. Note that although the upper arm switch 21 is described here, the drive circuit 24 for the lower arm switch 22 has a similar configuration.

The drive circuit 24 includes a drive IC 27 that receives drive commands from the control device 40, and the switch 21 is turned on and off by the drive IC 27. The driver IC 27 controls the charging and discharging of the gate of the switch 21, and when the switch is turned on, the gate is charged by applying a voltage, thereby turning on the switch 21. In addition, when the switch is turned off, the gate discharge turns off the switch 21.

The drive circuit 24 is configured to vary both a turn-on time, which is the transition time required when switch 21 transitions from the off state to the on state, and a turn-off time, which is the transition time required when switch 21 transitions from the on state to the off state, and this enables adjustment of the switching loss at each switch 21. Specifically, by switching a gate resistor disposed between the drive IC 27 and the gate of the switch 21, the time required for gate charging and discharging of the semiconductor switching element is adjusted, making both the turn-on time and the turn-off time variable. In the present embodiment, a first gate resistor 28 and a second gate resistor 29, having different resistance values, are connected in parallel between the drive IC 27 and the gate of the switch 21, and by switching between the gate resistors 28 and 29, the charging and discharging times (turn-on time, turn-off time) of the switch 21 are adjusted. The gate resistor 29 has a higher resistance value than the gate resistor 28. The gate resistor 28 corresponds to a gate resistor for normal operation, and the gate resistor 29 corresponds to a gate resistor for increased loss conditions.

Figs. 3A to 3C are timing charts showing the changes in a switch voltage Vsw between the drain and source terminals and a switch current Isw flowing between the drain and source terminals in switch 21.

Fig. 3A shows the changes in Vsw and Isw during normal operation, that is, when no control to prevent an increase in switching loss is performed. In this case, the hatched areas indicate switching losses at turn-on and turn-off.

Fig. 3B shows the changes in Vsw and Isw when the turn-on time and the turn-off time are each extended beyond normal values to control increased switching losses. In this case, switching losses increase during both turn-on and turn-off, thereby increasing the heat generated at the switch 21.

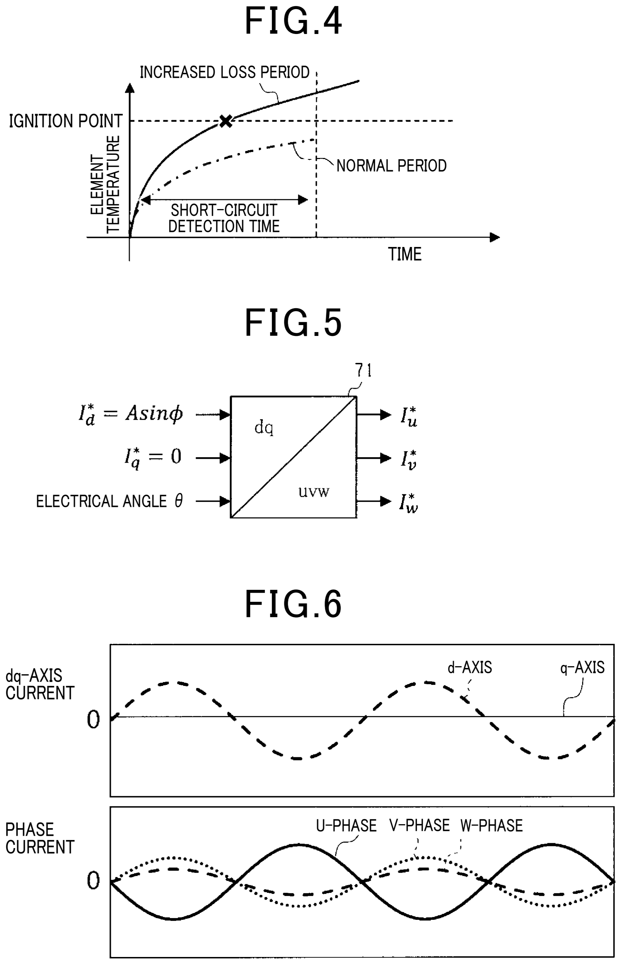

However, increasing switching losses during turn-on causes a steep rise in the element temperature at the switch 21 after turn-on begins. Therefore, in the event of a short-circuit fault occurring between the upper and lower arms, there is a possibility that the switch 21 could overheat due to excessive heat generation before the short-circuit fault is detected, raising the risk of fire. That is, as shown in Fig. 4, during the increased switching loss period indicated by the solid line, the slope of the element temperature rise becomes steeper compared to the normal period indicated by the dashed line. In this case, there is concern that the element temperature may exceed the ignition point before the time required for short-circuit detection has elapsed.

Therefore, in the present embodiment, as shown in Fig. 3C, the turn-off time is prolonged relative to the turn-on time to reduce heat generation during turn-on and increase heat generation during turn-off. As a result, when the switch 21 turns off, switching losses occur that are larger than those when it turns on.

In Fig. 3C, the turn-on time of switch 21 is set to the same duration as when switching losses are not increased (i.e., when there is no heat generation request), and the turn-off time is set to a longer duration compared to when switching losses are not increased (i.e., when there is no heat generation request). In other words, when switching losses increase due to heat generation requests, gate charging is performed via the first gate resistor 28 for normal operation during turn-on, while gate discharging is performed via the second gate resistor 29 for increased loss conditions during turn-off. This enables prompt current interruption when a short-circuit fault is detected between the upper and lower arms during switch-on.

Next, heat generation control by d-axis energization will be explained.

In the rotary electric machine 10, a d-axis and a q-axis are virtual axes, and the d-axis current Id flowing through the d-axis and the q-axis current Iq flowing through the q-axis, along with the phase currents Iu, Iv, and Iw flowing through the UVW phases respectively, are expressed by the following (Equation 1). In (Equation 1), $\theta$ is the electrical angle (rotational angle) of the rotary electric machine 10.

[Math 1]

$$\begin{bmatrix} I_d \\ I_q \end{bmatrix} \times \begin{bmatrix} cos\theta & -sin\theta \\ \cos\left(\theta - \frac{2\pi}{3}\right) & -\sin\left(\theta - \frac{2\pi}{3}\right) \\ \cos\left(\theta + \frac{2\pi}{3}\right) & -\sin\left(\theta + \frac{2\pi}{3}\right) \end{bmatrix} = \begin{bmatrix} I_u \\ I_v \\ I_w \end{bmatrix} \dots \text{(Equation 1)}$$

The control device 40 sets the phase current command values Iu*, Iv*, Iw* of each phase of the coil 11 based on the electrical angle θ of the rotary electric machine 10, the d-axis current command value Id*, and the q-axis current command value Iq* (current setting unit), and controls the phase currents flowing through each phase using the phase current command values Iu*, Iv*, Iw* (current control unit). In the present embodiment, when the vehicle is stopped and not moving, the rotary electric machine 10 does not generate torque, that is, the rotary electric machine 10 stops rotating, and current flows through each phase of the coil 11 to promote heat generation in the rotary electric machine system. This causes the battery 30 to heat up. Specifically, by performing switching control of the inverter 20 such that only the d-axis current Id flows among the d-axis current Id and the q-axis current Iq, the phase currents for each phase are made to flow in the rotary electric machine 10 while no torque is generated. n this case, the control device 40 calculates the phase currents Iu, Iv, and Iw of each phase in the above (Equation 1) by setting the stopping electrical angle of the rotary electric machine 10 to the electrical angle θ and setting the q-axis current among the d-axis current Id and the q-axis current Iq to 0.

Fig. 5 shows a process of a dq-UVW transformation when performing heat generation control. Fig. 5 shows a three-phase conversion unit 71, which converts the dq-axis current command values Id* and Iq* into the phase current command values Iu*, Iv*, and Iw* for the UVW phases. he three-phase conversion unit 71 receives Asinφ as the d-axis current command value Id*, and 0 as the q-axis current command value Iq*. In addition, the electrical angle θ of the rotary electric machine 10 in its rotational stop state is input as the electrical angle θ. In Asinφ, A is an amplitude command value that specifies the amplitude of the d-axis current, and φ is the phase that varies at a predetermined angular velocity. As a result, the d-axis current command value Id* is set as an alternating current that varies at a frequency of approximately 20 Hz. In this case, an AC d-axis current that varies in both positive and negative sides is set as the d-axis current command value Id*, and based on this d-axis current command value Id* (AC d-axis current), the phase current command values Iu*, Iv*, and Iw* that vary in both positive and negative sides are calculated.

Fig. 6 is timing charts showing the current waveforms of the dq-axis current and the phase current of each phase. In Fig. 6, while the q-axis current Iq is held at zero, the d-axis current Id is alternating in a sinusoidal waveform on both the positive and negative sides. In addition, the phase currents Iu, Iv, and Iw of each phase vary in amplitude corresponding to the electrical angle θ (stopping position) of the rotary electric machine 10. When the phase currents Iu, Iv, and Iw alternately change in both positive and negative sides, the state where one phase carries a positive phase current while the remaining two phases carry negative phase currents alternates with the state where two phases carry positive phase currents while the remaining phase carries a negative phase current. Note that here, for the U-phase coil, the V-phase coil, and the W-phase coil of coil 11, the current flowing from the anti-neutral point side toward the neutral point side is defined as positive current, and the current flowing in the opposite direction is defined as negative current.

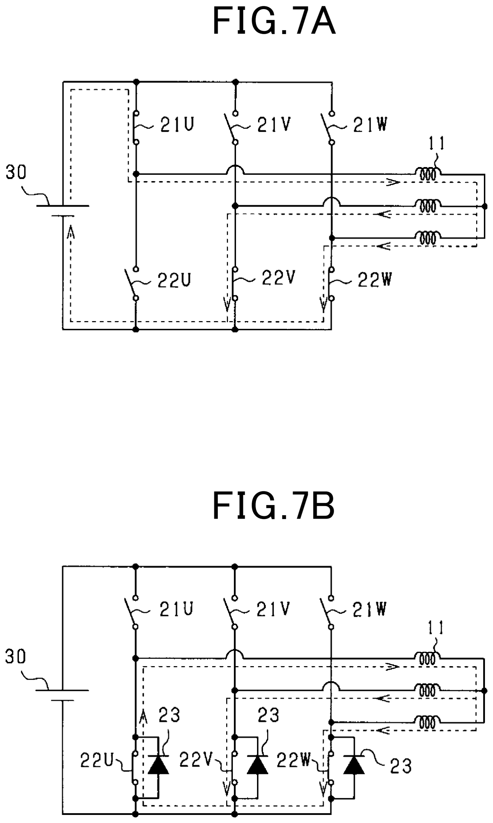

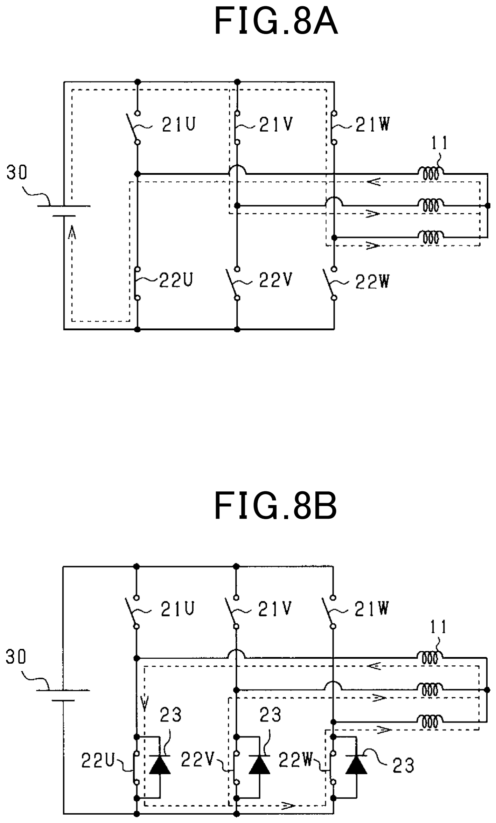

An example switching pattern for performing heat generation control by d-axis energization is explained using Figs. 7A, 7B, 8A and 8B. Figs. 7A and 7B show switching patterns when a positive current flows as the U-phase current and negative currents flow as the V-phase and W-phase currents, and Figs. 8A and 8B show switching patterns when positive currents flow as the V-phase and W-phase currents and a negative current flow as the U-phase current. Here, the three-phase switches 21 in the upper arm are designated as switches 21U, 21V, and 21W, while the three-phase switches 22 in the lower arm are designated as switches 22U, 22V, and 22W.

In Fig. 7A, the switch 21U is turned on and the switches 21V and 21W are turned off in the upper arm, while the switch 22U is turned off and the switches 22V and 22W are turned on in the lower arm. As a result, a positive current flows from the battery 30 as the U-phase current, while negative currents flow as the V-phase and W-phase currents. In addition, continuing from the state shown in Fig. 7A, in Fig. 7B, the switch 21U in the upper arm is turned off, thereby turning off all phase switches 21, and the switches 22 in the lower arm is turned on for all phases. This causes current to circulate in the return path, which includes the lower arm switch 22 and the coil 11 of each phase. In Fig. 7A and Fig. 7B, the switches 21U and 22U of the upper and lower arms of the U phase are alternately turned on and off, and this switching is repeated at a predetermined cycle during the period when a positive current flows in the U phase.

Further, in Fig. 8A, the switches 21V and 21W are turned on and the switch 21U is turned off in the upper arm, while the switches 22V and 21W are turned off and the switch 22U is turned on in the lower arm. As a result, a positive current flows from the battery 30 as the V and W phase currents, and a negative current flows as the U phase current. Furthermore, continuing from the state shown in Fig. 8A, in Fig. 8B, switching off the switches 21V and 21W in the upper arm causes all phase switches 21 to be turned off, while all phase switches 22 in the lower arm are turned on. This causes current to circulate in the return path, which includes the lower arm switch 22 and the coil 11 of each phase. In Figs. 8A and 8B, the upper arm switches 21V and 21W and the lower arm switches 22V and 22W of the V and W phases are alternately turned on and off, and this switching is repeated at a predetermined cycle during the period when positive currents flow through the V and W phases.

In the above heat generation control, phase current command values Iu*, Iv*, and Iw* set based on the AC d-axis current cause phase currents Iu, Iv, and Iw to flow in all phases. In this case, the inverter 20 performs switching control for all phases, and during this switching control for all phases, controlling the increase in switching losses is also performed. In the inverter 20, switching losses are increased at all phase switches 21 and 22, and unlike cases where switching losses are increased at only some phases, this distributes heat generation across each switch, thereby enabling efficient heat generation within the rotary electric machine system.

As shown in Fig. 7B and Fig. 8B, when circulating current through the path including the lower arm switch 22 and the coil 11 of each phase, current flows from the source to the drain in one of the phase's lower arm switches 22 (switch 22U in Fig. 7B, switches 22V and 22W in Fig. 8B), but it also becomes possible for current to flow through the diodes 23. In this case, applying current with the lower arm switch 22 turned on reduces conduction losses, so it is conceivable that losses will be lower than when the diode 23 is energized. In addition, when current flows through the diode 23, an increase in switching losses due to the on-off operation of the lower arm switch 22 cannot be anticipated. Based on this, it can be considered that when current flows from the source to the drain of the lower arm switch 22 during current circulation, the benefit of controlling the increase in switching loss due to the on-off operation of the lower arm switch 22 may not be obtained.

Considering this point, when turning on the upper arm switch 21 in one phase to apply phase current to the coil 11, and then turning off the upper arm switch 21 to return the phase current, it is preferable to keep the lower arm switch 22, which is in phase with the upper arm switch 21, in the off state and return the phase current through the diode 23 connected in parallel with the lower arm switch 22. In this case, switching should be performed only on the upper arm switch 21 of the inverter 20, where increased switching losses due to on-off operation are anticipated, while switching should not be performed on the lower arm switch 22. In Fig. 7B, since switching of the switch 22U does not occur, current flows back through the diode 23 of the U-phase lower arm, and in Fig. 8B, since switching of the switches 22V and 22W does not occur, current flows back through the diodes 23 of the V- and W-phase lower arms.

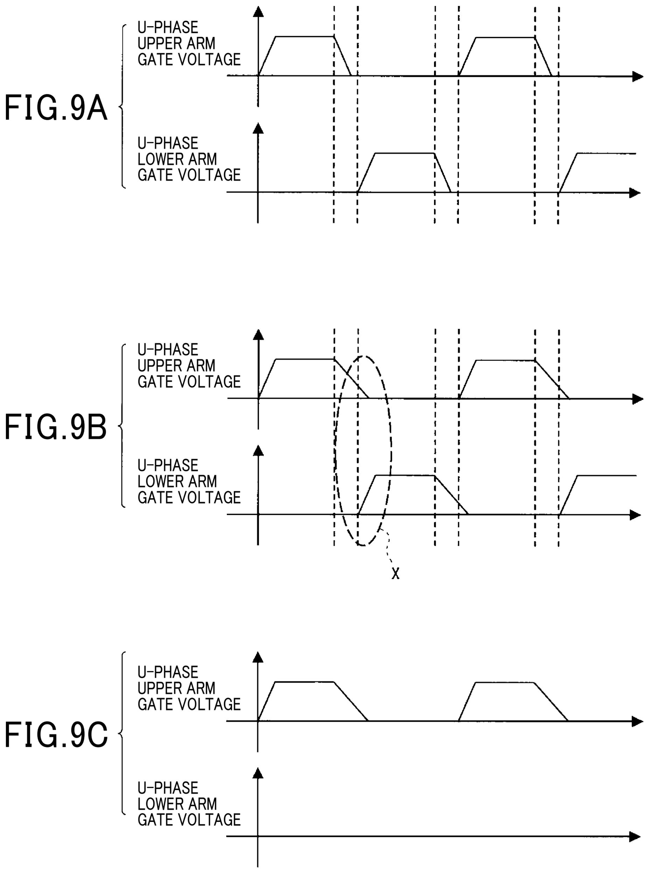

Figs. 9A, 9B and 9C show the gate voltage transition at the switches 21U and 22U of the upper and lower arms. Fig. 9A shows the gate voltage transition of the switches 21U and 22U during normal operation, and Fig. 9B shows the gate voltage transition of the switches 21U and 22U during increased switching loss. In Fig. 9B, the turn-off time of the switches 21U and 22U is longer compared to Fig. 9A, raising concerns that the switches 21U and 22U may turn on simultaneously (point X in the drawing). In other words, during switching between the upper and lower arms, a dead time is typically set to account for the time required for turn-off under normal conditions, however, if turn-off is delayed, the dead time may elapse before turn-off is complete, raising concerns about a short circuit between the upper and lower arms.

In contrast, in Fig. 9C, only the upper arm switch 21U among the upper and lower arm switches 21U and 22U is switched. This suppresses the short circuits from occurring in the upper and lower arms even when the turn-off time of switch 21U is longer than normal (even when turn-off is delayed).

Further, when alternating the phase current of each phase in both positive and negative sides, as shown in Fig. 6, the amplitudes of the phase currents for each phase do not match, and consequently, heat generation of the switches 21 and 22 differs for each phase, potentially resulting in different element temperatures for each phase. Therefore, in the present embodiment, the period during which switching losses are increased (the period during which the gate resistance value is increased) is adjusted for each phase to balance heat generation of the switches 21 and 22 in each phase.

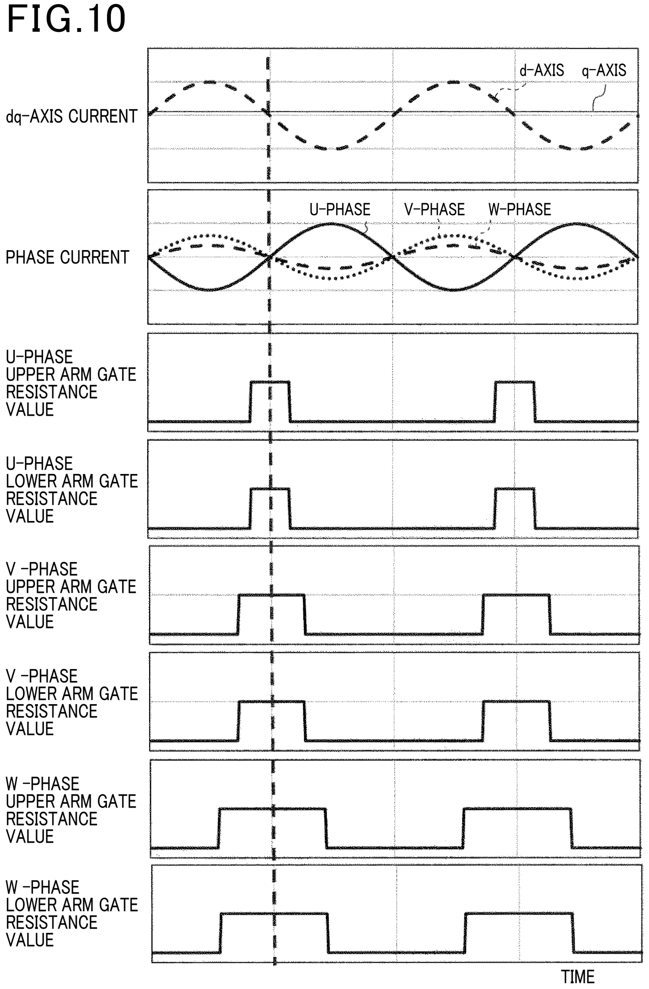

Fig. 10 shows an example of controlling the switching of gate resistance in each phase. In Fig. 10, when the phase currents of each phase alternately change in both positive and negative sides, the amplitude of the U-phase current is the largest, followed by the V-phase current and then the W-phase current. Therefore, in heat generation control by d-axis energization, it is anticipated that among the phase switches 21 and 22, the U-phase switch will reach the highest temperature, while the W-phase switch will reach the lowest temperature. Therefore, in the present embodiment, the loss increase period during which switching losses are increased is set variably based on the magnitude of the phase current flowing in each phase.

Specifically, the control device 40 acquires the amplitude of the phase current for each phase through detection or estimation, and based on the difference in current amplitude between phases, sets the period during which the gate resistance value is increased for each phase, that is, the loss increase period. The loss increase period should be set as the time ratio representing the proportion of the loss increase period within one cycle during which the phase current of each phase undergoes alternating current variation. In Fig. 10, the amplitude of the phase current of each phase is U phase > V phase > W phase, and therefore the period (loss increase period) during which the gate resistance value is increased is set to the shortest in the U phase, and the period (loss increase period) during which the gate resistance value is increased is set to the longest in the W phase.

The control device 40 may set a period for increasing switching losses for each phase based on the element temperature detected by the element temperature sensor 26. In this case, the control device 40 sets a target value (target temperature) for the element temperature in the switch of each phase, and sets a period for increasing switching loss, that is, a period for increasing the gate resistance value, based on the deviation between the element temperature detected by the element temperature sensor 26 and the target temperature. This enables the switches 21 and 22 for each phase to be controlled to the desired temperature. Note that when only the upper arm switch 21 among the upper and lower arm switches 21, 22 is switched, it is preferable that the loss increase period be set only for that switch 21 by element temperature feedback control.

As described above, by setting the loss increase period through element temperature feedback control, it is possible to suppress element temperature from varying caused by differences in the amplitude of the phase current, even when such differences exist between phases.

Further, since the relationship between the dq-axis current and the phase current exhibits electrical angle dependency, depending on the electrical angle θ of the rotary electric machine 10, current may flow barely at all in some phases, and this could adversely affect the increase in losses in each phase. In other words, when the phase current command values Iu*, Iv*, and Iw* for each phase are set according to the above (Equation 1), depending on the electrical angle θ of the rotary electric machine 10 in the rotational stop state, the phase current of one phase may become zero or a current value near zero, and this could result in an excessively large difference in heat generation between the phases. Therefore, in the present embodiment, the electrical angle θ of the rotary electric machine 10 is set such that the phase current of each phase is all above a predetermined threshold (angle setting unit), and based on this electrical angle θ, the phase current command values Iu*, Iv*, and Iw* for each phase are set.

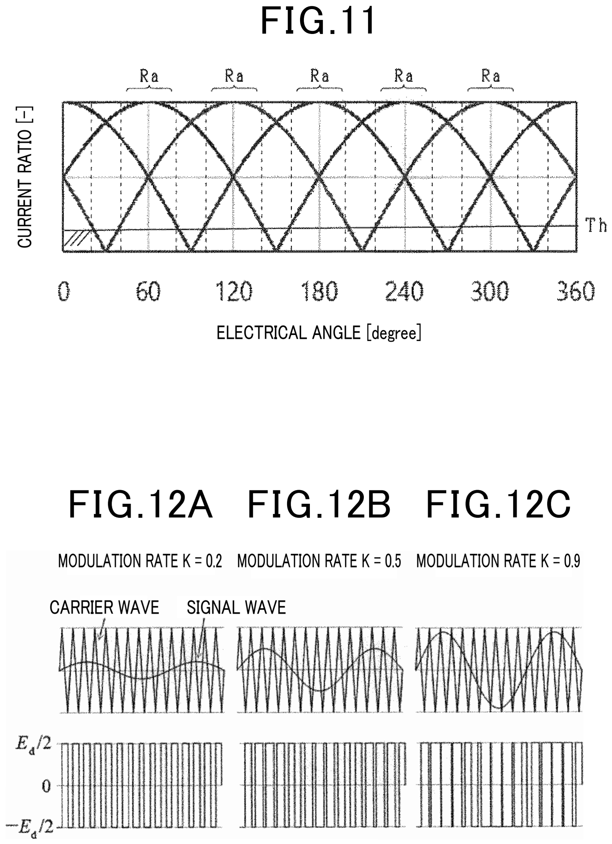

Specifically, when the current ratio of the phase currents of each phase changes according to the electrical angle θ as shown in Fig.11, it is preferable that the electrical angle θ when heat generation control is performed by d-axis current flow is an angle within a predetermined range Ra in which the current ratio of each phase is equal to or greater than a threshold value Th. Note that the current ratio is the ratio of the phase current of each phase to the total current flowing through the coil 11. In Fig. 11, since the phase current of one of the phases becomes zero at electrical angles θ of 30 degrees, 90 degrees, 150 degrees, 210 degrees, 270 degrees, and 330 degrees, the range excluding the vicinity of each of these angles is defined as the predetermined range Ra. In this case, if a detected electrical angle θa detected by the rotation angle sensor 12 during the rotational stop state of the rotary electric machine 10 is not within the predetermined range Ra, it is desirable to generate torque in the rotary electric machine 10 and operate the electrical angle θ so that it falls within the predetermined range Ra.

In addition, during vehicle running, the modulation rate in the inverter 20 changes in accordance with changes in the operating state of the rotary electric machine 10. Further, a drive duty of each switch 21, 22 changes in accordance with changes in the modulation rate. Here, when the modulation rate is large, if the on time of the drive pulse (PWM pulse) of each switch 21, 22 becomes shorter than a predetermined time, it becomes difficult to extend the turn-on time or turn-off time, i.e., to control the increase in switching loss.

Therefore, in the present embodiment, when the on time of the drive pulses for the switches 21 and 22 is shorter than a predetermined time, heat generation control due to increased switching losses is not performed. Figs. 12A, 12B and 12C show timing charts of switching control of three states with different modulation rates. In Figs. 12A, 12B and 12C, since the drive pulse on time becomes shorter than the predetermined time in a case of Fig. 12C, switching loss increase is not performed. Note that in the case of Fig. 12C, it may be possible to avoid performing increased switching losses throughout the entire period, or it may be possible to avoid performing increased switching losses only during periods where the drive pulse on time is shorter than the predetermined time.

Incidentally, when performing heat generation control by d-axis energization during vehicle stopping (when the rotary electric machine 10 ceases rotation), if the electrical angle of the rotary electric machine 10 recognized by the control device 40 differs from the actual electrical angle, unintended q-axis current flow may occur. In this case, even while the vehicle is stopped, unnecessary torque may be generated in the rotary electric machine 10, causing the electrical angle deviation to increase cumulatively. Specifically, in the three-phase conversion unit 71 shown in Fig 5, when the detected angle from the rotation angle sensor 12 is input as the electrical angle θ, any detection error in the rotation angle sensor 12 will cause a discrepancy between the angle recognized by the control device 40 and the actual electrical angle. In particular, it is thought that an electrical angle error of several degrees may occur when the vehicle is stopped. There is a concern that this miscalculation of the electrical angle may cause unnecessary rotation in the rotary electric machine 10.

Therefore, in the present embodiment, as a preliminary control step for heat generation control by d-axis energization, alignment control is performed to position the electrical angle θ of the rotary electric machine 10 at the recognized angle (command angle α) detected by the control device 40 by applying a DC d-axis current to the rotary electric machine 10, and following this alignment control, heat generation control by an AC d-axis current is then performed. As a result, the actual electrical angle is matched to the electrical angle recognized by the control device 40, and under the assumption that the actual electrical angle is the command angle α, heat generation control is performed for all phases by changing the d-axis current to an alternating current manner without referring to the detection value of the rotation angle sensor 12.

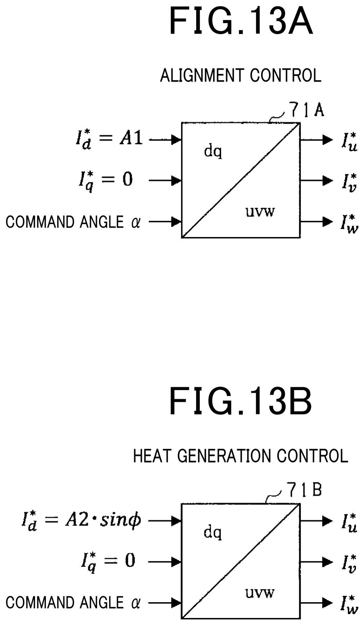

Fig. 13A shows a process of a dq-UVW transformation when performing alignment control, and Fig. 13B shows a process of a dq-UVW transformation when performing heat generation control using the AC d-axis current.

As shown in Fig. 13A, a three-phase conversion unit 71A receives A1 as the d-axis current command value Id* and 0 as the q-axis current command value Iq*. In addition, a predetermined command angle α is input as the electrical angle θ. The command angle α, as described in Fig. 11, is an angle at which the total current of each phase exceeds a predetermined threshold (an angle within the predetermined range Ra). The three-phase conversion unit 71A calculates the phase current command values Iu*, Iv*, and Iw* for each phase based on the d-axis current command value Id* (= $A_1$) and the command angle α. In this case, the d-axis current command value Id* is a DC d-axis current, and the phase current command values Iu*, Iv*, and Iw* are calculated as DC phase currents, respectively. Then, during alignment control, the phase currents for each phase are controlled using the phase current command values Iu*, Iv*, and Iw* calculated by the three-phase conversion unit 71A.

Note that the calculation process for the phase current command values Iu*, Iv*, and Iw* in the three-phase conversion unit 71A corresponds to a first setting process, and the position alignment control using these phase current command values Iu*, Iv*, and Iw* corresponds to a first current control.

Further, as shown in fig 13B, a three-phase conversion unit 71B receives $A_2 \cdot \sin\varphi$ as the d-axis current command value Id*, and 0 as the q-axis current command value Iq*. In addition, as the electrical angle $\theta$, a predetermined command angle $\alpha$ is input, similar to the three-phase conversion unit 71A. The three-phase conversion unit 71B calculates the phase current command values Iu*, Iv*, and Iw*, which vary alternately in both positive and negative sides, using an AC d-axis current command value Id* that alternates in both positive and negative sides.

Note that the calculation process for the phase current command values Iu*, Iv*, and Iw* in the three-phase conversion unit 71B corresponds to a second setting process, and heat generation control based on the phase current command values Iu*, Iv*, and Iw* corresponds to a second current control.

In the three-phase conversion unit 71A shown in Fig. 13A, the maximum absolute value of the DC d-axis current is denoted as A1, and in the three-phase conversion unit 71B shown in Fig/ 13B, the maximum absolute value of the AC d-axis current is denoted as A2. A1 and A2 are amplitude command values that specify the amplitude of the d-axis current. It is preferable that A1 and A2 have a relationship of A1>A2. In other words, the absolute value of the DC d-axis current should be greater than the absolute value of the AC d-axis current. In this case, A2 is determined to regulate the AC d-axis current based on the magnitude of heat generation request, and it is desirable that A1 be set to a value greater than A2. For example, A2 may be determined based on the element temperatures of the switches 21 and 22. However, A1 and A2 may be A1 = A2.

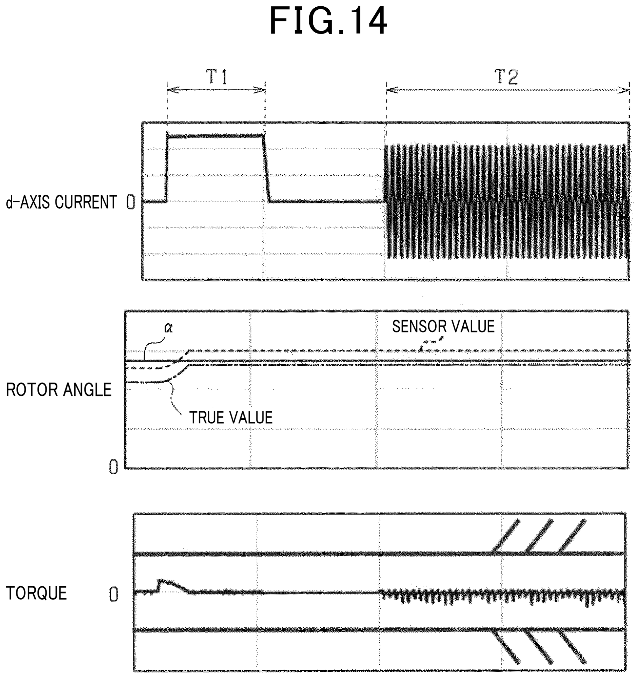

Fig. 14 shows timing charts for specifically explaining the alignment control shown in Fig. 13 and heat generation control using the AC d-axis current. Fig. 14 shows the detected electrical angle $\theta a$ (sensor value) detected by the rotation angle sensor 12 as the rotor angle of the rotary electric machine 10, indicated by a broken line, the actual electrical angle $\theta b$ (true value) in the rotary electric machine 10 is indicated by a dashed line, and the constant command angle $\alpha$ is indicated by a solid line. In the present example, the detected electrical angle $\theta a$ has an angle error with respect to the actual electrical angle $\theta b$.

In Fig. 14, the alignment control is performed during period T1 in response to heat generation request. Specifically, the electrical angle $\theta$ of the rotary electric machine 10 is set as the command angle $\alpha$, the DC d-axis current is set as the d-axis current command value Id*, and the phase currents of each phase of the coil 11 are controlled using the phase current command values Iu*, Iv*, and Iw* calculated based on the command angle $\alpha$ and the DC d-axis current. This adjusts the electrical angle of the rotary electric machine 10 to the command angle $\alpha$, which is the recognition angle of the control device 40. At this time, even if the detected electrical angle $\theta a$ has a detection error, the electrical angle of the rotary electric machine 10 is operated to the desired electrical angle without being affected by the detection error.

Subsequently, during period T2, heat generation control is performed using the AC d-axis current. Specifically, the electrical angle $\theta$ of the rotary electric machine 10 is set as the command angle $\alpha$, the AC d-axis current is set as the d-axis current command value Id*, and the phase currents of each phase of the coil 11 are controlled using the phase current command values Iu*, Iv*, and Iw* calculated based on the command angle $\alpha$ and the AC d-axis current. At this time, energization is performed for each phase in the coil 11 while the electrical angle of the rotary electric machine 10 is maintained at the command angle $\alpha$ adjusted by the prior alignment control. Furthermore, by suppressing the deviation from occurring between the angle recognized by the control device 40 and the actual electrical angle, the generation of unintended q-axis torque is suppressed from occurring, and the rotary electric machine 10 is maintained in the rotational stop state.

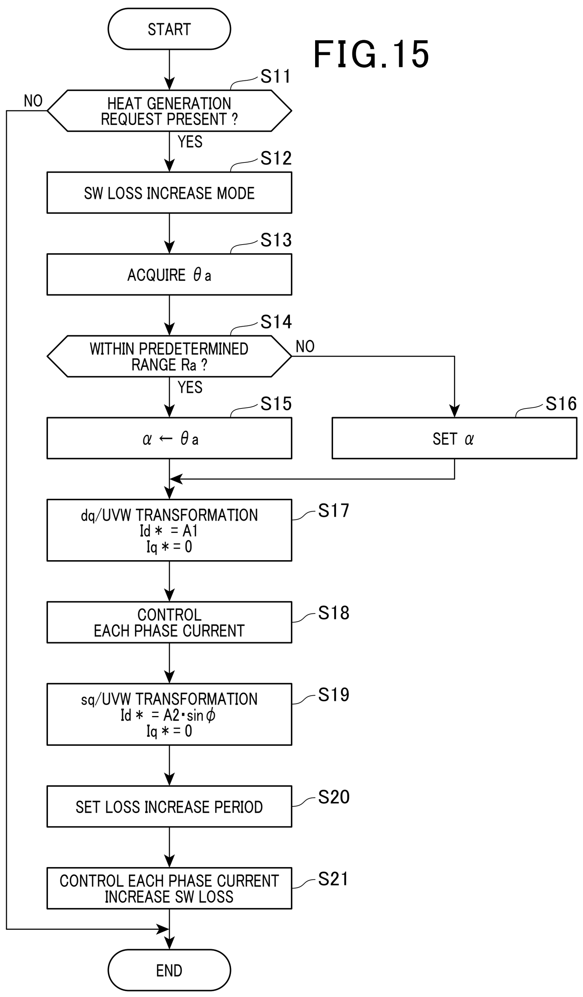

Fig. 15 is a flowchart showing the procedure for heat generation control during the vehicle is stopped. This process is repeatedly performed at predetermined intervals by the control unit 40 when the vehicle is stopped, for example, when the ignition switch (IG switch) of the vehicle is in the off state. During stops, heat generation control is performed through two methods: heat generation control due to increased switching losses in the switches 21 and 22, and heat generation control through d-axis energization where no torque is generated in the rotary electric machine 10.

In Fig. 15, in step S11, it is determined whether a heat generation request has occurred. For example, if a heat generation request is received from the upper-level control device, step S11 is affirmed. If a heat generation request has occurred, the process proceeds to the subsequent step S12, and if no heat generation request has occurred, the process ends.

In step S12, a control mode of the inverter 20 is set to a switching loss increase mode. This enables appropriate control of increased switching losses through the switching control of the inverter 20 while the vehicle is stopped.

Then, in step S13, the detected electrical angle $\theta a$ detected by the rotation angle sensor 12 is acquired. In the subsequent step S14, it is determined whether the detected electrical angle $\theta a$ falls within a predetermined range Ra. The predetermined range Ra is a range defined by the electrical angle at which the phase current of each phase of the coil 11 reaches or exceeds a predetermined threshold. In step S14, if the detected electrical angle $\theta a$ falls within the pre-

determined range Ra, the process proceeds to step S15, and if the detected electrical angle θa does not fall within the predetermined range Ra, the process proceeds to step S16.

In step S15, the detected electrical angle θa is set as the command angle α used for heat generation control by d-axis energization. Further, in step S16, a predetermined electrical angle within the predetermined range Ra is set as the command angle α. At this time, to suppress the rotor angle of the rotary electric machine 10 from excessively changing, it is desirable to set the command angle α such that the change from the detected electrical angle θa remains within a predetermined value. The process in steps S15 and S16 ensures that a minimum current flows through each phase.

Subsequently, in steps S17 and S18, a DC d-axis current is set as the d-axis current command value Id*, and alignment control is performed to adjust the electrical angle of the rotary electric machine 10 to the command angle α. That is, in step S17, the d-axis current command value Id* is set to A1, the q-axis current command value Iq* is set to 0, and the electrical angle θ is set as the command angle α, and the phase current command values Iu*, Iv*, and Iw* are then calculated by the dq/UVW transformation. In the subsequent step S18, the switching control is performed for each phase switch 21, 22 based on the phase current command values Iu*, Iv*, Iw* calculated in step S17, thereby controlling the phase current flowing through each phase of the coil 11.

Note that when applying the DC d-axis current during alignment control, the switching loss increase control is not performed at the switches 21 and 22.

Subsequently, in steps S19 to S21, an AC d-axis current is set as the d-axis current command value Id*, and heat generation control is performed by energizing the d-axis. At this time, the control device 40 simultaneously performs heat generation control due to increased switching losses.

In more detail, in step S19, the d-axis current command value Id* is set to A2·sinφ, the q-axis current command value Iq* is set to 0, and the electrical angle θ is set as the command angle α, and the phase current command values Iu*, Iv*, and Iw* are then calculated by the dq/UVW transformation.

In the subsequent step S20, a loss increase period is set to increase switching losses based on the magnitude of the phase current flowing in each phase. At this time, since the amplitude of each phase current is determined according to the command angle α of the rotary electric machine 10, it is advisable to set the loss increase period for each phase based on the current amplitude of that phase. As a result, for example as shown in Fig. 10, a period for increasing the gate resistance value (loss increase period) is set for each phase.

Subsequently, in step S21, the switching control is performed for each phase switch 21, 22 based on the phase current command values Iu*, Iv*, Iw* calculated in step S19, thereby controlling the phase current flowing through each phase of the coil 11. At this time, the control device 40 performs the following processes as to control the increase in switching losses.

(1) In the drive circuit 24 of the inverter 20, the gate resistors for each switch 21, 22 are switched to gate resistors for increased loss, thereby prolonging the transition time during switch turn-on and turn-off. During the loss increase period set in step S20, the gate resistance of each switch 21, 22 is set to the second gate resistance 29 for the loss increase period, and outside the loss increase period, the gate resistance of each switch 21, 22 is set to the first gate resistance 28 for normal operation.

(2) When switching the switches 21 and 22 on and off, set the turn-off time to be longer than the turn-on time. At this time, it is advisable to set the turn-on time to the same duration as when there is no heat generation request, and to set the turn-off time to a longer duration compared to when there is no heat generation request.

(3) Switching is performed only with the upper arm switch 21 of the inverter 20, where switching losses are expected to increase due to on-off switching, while switching is not performed with the lower arm switch 22.

Alternatively, instead of the above (2), it is also possible to set both the turn-on time and the turn-off time to longer durations compared to when there is no heat generation request. Alternatively, switching may be performed using both switches 21 and 22 on the upper and lower arms of the inverter 20 instead of the method described in (3) above.

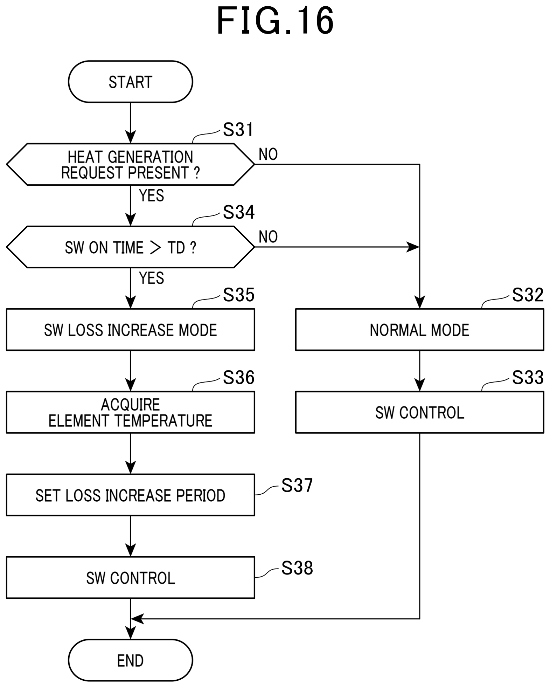

Fig. 16 is a flowchart showing a procedure for heat generation control during vehicle running. This process is repeatedly executed at predetermined intervals by the control unit 40 while the vehicle is in motion, for example, when the ignition switch (IG switch) of the vehicle is in the ON state. While the vehicle is running, heat generation control is performed by increasing the switching loss of each of the switches 21 and 22.

In Fig. 16, step S31, it is determined whether a heat generation request has occurred. For example, if no heat generation request is received from the upper-level control device, step S31 is negated and the process proceeds to step S32. In step S32, the control mode of the inverter 20 is set to normal mode, and in the subsequent step S33, switching control of the inverter 20 is performed using the normal mode control.

In addition, if a heat generation request has occurred, the process proceeds to step S34. In step S34, it is determined whether the on time of the PWM pulse that turns each switch 21, 22 on and off is longer than a predetermined time TH. If the result of step S34 is affirmative, the process proceeds to step S35, and if the result of step S34 is negated, the process proceeds to step S32. At this point, if step S34 is negated, that is, if the PWM pulse on time is shorter than the predetermined time TH, the switching loss increase is not performed.

In step S35, the control mode of the inverter 20 is set to a switching loss increase mode. This enables appropriate control of increased switching losses during vehicle running through the switching control of the inverter 20.

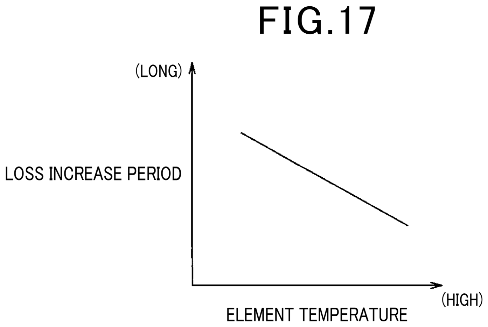

In step S36, the element temperature (switch temperature) detected by the element temperature sensor 26 is acquired, and in the subsequent step S37, a loss increase period is set based on the element temperature to perform control for increasing switching losses. Specifically, the loss increase period may be set using the relationship shown in Fig. 17, for example. In Fig. 17, the relationship is given that as the element temperature decreases, the loss increase period increases. The loss increase period should be set as the time ratio representing the proportion of the loss increase period within one cycle during which the phase current of each phase undergoes alternating current variation. The loss increase period should be set for each phase.

Subsequently, in step S38, the following processes are performed as heat generation control due to increased switching losses.

- In the drive circuit 24 of the inverter 20, the gate resistors for each switch 21, 22 are switched to gate resistors for increased loss, thereby prolonging the transition time during switch turn-on and turn-off. During the loss increase period set in step S37, the gate resistance of each switch 21, 22 is set to the second gate resistance 29 for the loss increase period, and outside the loss increase period, the gate resistance of each switch 21, 22 is set to the first gate resistance 28 for normal operation.

- When switching the switches 21 and 22 on and off, set the turn-off time to be longer than the turn-on time. At this time, it is advisable to set the turn-on time to the same duration as when there is no heat generation request, and to set the turn-off time to a longer duration compared to when there is no heat generation request.

- Only the upper arm switch 21, among the switches 21 and 22 on the upper and lower arms of the inverter 20, performs switching, as switching loss is expected to increase due to its on-off operation, and the lower arm switch 22 does not perform switching.

Note that both the turn-on time and turn-off time may be longer than when there is no heat generation request. Alternatively, switching may be performed using both switches 21 and 22 on the upper and lower arms of the inverter 20.

According to the present embodiment described in detail above, the following excellent effects are obtained.

When there is a heat generation request in the rotary electric machine system, the transition time during either the turn-on or turn-off of the switches 21 and 22 (semiconductor switching elements) in the inverter 20 is made longer than when there is no heat generation request. This enables the generation of heat at each switch 21, 22 of the inverter 20 due to increased switching losses. As a result, efficient heat generation can be achieved in the rotary electric machine system.

During heat generation due to increased switching losses, the element temperature rises more rapidly than under normal conditions, and therefore, if a short-circuit fault occurs between the upper and lower arms in the inverter 20, there is a concern that the element temperature could rise excessively before short-circuit detection occurs during switch-on. In this regard, since the configuration is such that larger switching losses occur when the switches 21 and 22 are turned off than when they are turned on, the turn-on time can be made relatively short. This makes it possible to prevent the element temperature from excessively rising before a short circuit is detected when the switch is turned on.

In the event of a short-circuit abnormality occurring between the upper and lower arms in the inverter 20, it is necessary to promptly interrupt the current when a short-circuit is detected upon switch-on. Considering this point, when a heat generation request is present, the turn-on time of the switches 21 and 22 is set to the same duration as when no heat generation request is present, while the turn-off time is set to a longer duration compared to when no heat generation request is present. In this case, since increased switching losses during turn-on are not anticipated, the switches 21 and 22 can be configured to perform prompt current interruption upon short-circuit detection.

When performing heat generation control by d-axis energization, the upper arm switch 21 of one phase is turned on to allow the phase current to flow, and subsequently, when the upper arm switch 21 is turned off to return the phase current, the lower arm switch 22 of the same phase as the upper arm switch 21 is kept in the off state, and the phase current is then returned through the diode 23 connected in parallel with the lower arm switch 22. In this case, even if the lower arm switch 22 does not control the increase in switching loss, heat generation due to current flowing through the diode 23 can be anticipated. In addition, in the configuration where the on-off transition time of switches 21 and 22 is prolonged, there is a risk of short-circuiting between the upper and lower arms, however, since only the upper arm switch 21 is switched in the present configuration, the short-circuits between the upper and lower arms is suppressed from occurring.

During the vehicle running, the drive duty may change according to the vehicle's running state, potentially resulting in the PWM pulse on-time being shorter than the predetermined time. In addition, when the on time of the PWM pulse is short, it is considered that the impact on current control due to prolonging the transition time of the switches 21 and 22 becomes significant. Considering this point, the configuration was designed such that switching loss increase is not performed when the PWM pulse on-time is shorter than the predetermined time. This makes it possible to prevent heat generation control caused by increased switching loss from adversely affecting current control while the vehicle is running.

The period during which the transition times (turn-on time, turn-off time) of the switches 21 and 22 are prolonged, i.e., the period during which switching losses are increased, is set based on the element temperature (switch temperature) of the semiconductor switching element. This enables proper management of the element temperature when performing heat generation control due to increased switching losses, thereby suppressing the semiconductor switching element from degrading and preventing overheating from occurring.

In the configuration where current control (heat generation control by AC d-axis current) is performed to ensure that phase currents alternating in both positive and negative sides flow through each phase of the coil 11 during the rotational stop state of the rotary electric machine 10 (vehicle is in a stopped state), the switches 21 and 22 are turned on and off for all phases of the coil 11. When this current control is performed, heat generation control due to an increase in switching loss (control in which the transition time of the switches 21 and 22 of each phase is lengthened) is performed. In this case, switching losses can be generated by the switches 21 and 22 for all phases, thereby eliminating situations where heat generation occurs only in switches for some phases.

When controlling heat generation by energizing the d-axis, if the phase current for each phase alternates between positive and negative sides, the amplitude of the phase current may not be consistent across phases, and consequently, heat generation of the switches 21 and 22 may differ for each phase. Considering this point, a period during which the transition times (turn-on time, turn-off time) of the switches 21 and 22 are lengthened, i.e., a period during which control to increase switching loss is implemented, is set based on the magnitude of the phase current of each phase. Specifically, the time ratio for the period during which the gate resistance is increased (the time ratio for the period using the second gate resistor 29 for loss increase) is adjusted for each phase. This allows the difference in heat generation between the switches 21 and 22 of each phase to be minimized, even if the amplitudes of the phase currents of each phase do not match.

When performing current control to ensure that alternating phase currents flowing in both positive and negative sides pass through each phase of the coil 11 while the rotary electric machine 10 is in the rotational stop state, depending on the electrical angle θ of the rotary electric machine 10, the phase current of one phase may become zero or near-zero (i.e., current imbalance occurs between phases), and this can lead to an excessively large difference in heat generation between phases. In this regard, the configuration performs current control such that, when the rotary electric machine 10 is in the rotational stop state, the phase current of each phase reaches or exceeds a predetermined threshold, and this suppresses current from flowing predominantly in any single phase and prevents excessive differences in heat generation between phases.

When a heat generation request is determined in the rotary electric machine system and the rotary electric machine 10 is in the rotational stop state, an AC d-axis current is set as the d-axis current command value to supply alternating phase currents that vary in both positive and negative sides to each phase of the coil 11, and based on this AC d-axis current, the phase current command values are set. According to this configuration, phase current command values set for each phase based on the AC d-axis current cause phase current to flow in all phases, and switching control is performed at the switches 21 and 22 for all phases in the inverter 20. Therefore, switching operation across all phases generates heat, enabling the inverter 20 to generate more heat compared to when switching operation occurs only in some phases. In addition, when heat generation is performed by switching control using only certain phases, heat generation control may be restricted due to certain switches 21 becoming high temperature, however, this drawback can be suppressed from occurring. As a result, efficient heat generation can be achieved in the rotary electric machine system.

When there is a heating requirement and the rotary electric machine 10 is in the rotational stop state, the phase current command values for each phase are set based on the command angle α, which is the electrical angle θ of the rotary electric machine 10, and the DC d-axis current command value, which is the d-axis current command value, and the phase currents are then controlled using these phase current command values. Then, based on the command angle α and the AC d-axis current, the phase current command values for each phase were set, and the phase currents were controlled according to those command values. In this case, the electrical angle θ of the rotary electric machine 10 can be fixed at the recognition angle (command angle α) of the control device 40, allowing heat generation by flowing the AC d-axis current. This suppresses the undesirable effect from occurring where the rotary electric machine 10 rotates unintentionally due to detection errors in the rotation angle sensor 12 during heat generation control by d-axis energization.

When performing position control using DC d-axis current, the absolute value of the DC d-axis current was set to a value greater than the absolute value of the AC d-axis current. This enables proper alignment control to be performed prior to heat generation control by AC -axis current.

When performing alignment control using DC d-axis current, the configuration was set such that the command angle α is defined as the electrical angle θ at which the phase current of each phase of the coil 11 reaches or exceeds a predetermined threshold. This suppresses current from flowing predominantly in any single phase during heat generation control by d-axis energization following alignment control, thereby preventing excessive differences in heat generation between phases.

In DC d-axis current alignment control, switching occurs in some phases, and therefore, when controlling increased switching losses, there is concern that heat generation may vary between phases. Considering this point, the positioning control using the DC d-axis current does not control the increase in switching loss, while the heat generation control using the AC d-axis current does control the increase in switching loss. This suppresses excessive temperature differences from occurring at the switches of each phase during the preformation of alignment control.

(Second Embodiment)

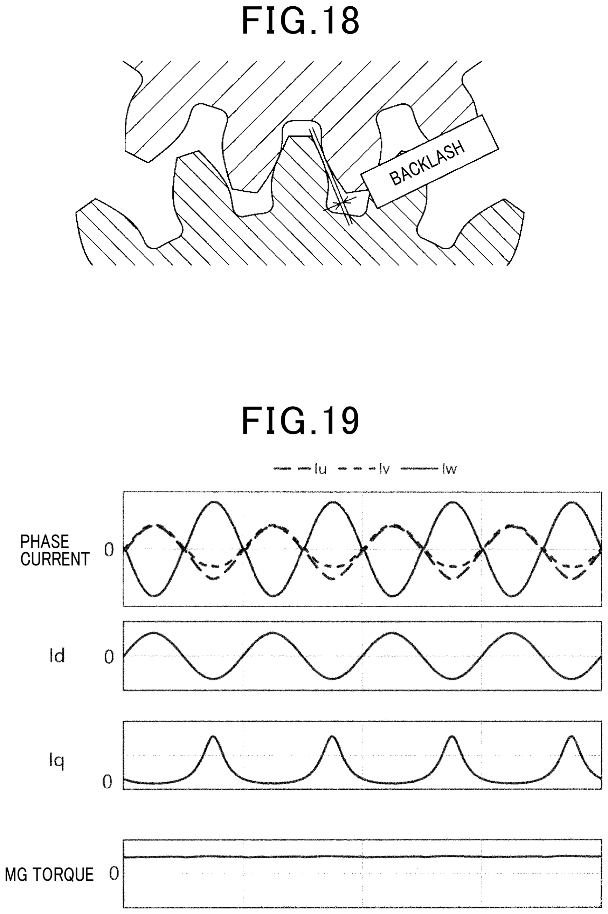

The rotary electric machine system shown in Fig. 1 has a configuration where the rotation of the rotor of the rotary electric machine 10 is transmitted to the axle 52 via the gear device 51. The rotation of the rotor of the rotary electric machine 10 is transmitted to the axle side through the meshing of the gears in the gear device 51. In this case, as shown in Fig. 18, a gap called backlash exists in gear meshing to enable smooth rotation, and within the backlash range, the resistance experienced by the rotor of the rotary electric machine 10 is small, allowing the gear to rotate with minimal torque, which generates gear noise. Therefore, when heat generation control by d-axis energization is performed while the rotary electric machine 10 is in the rotational stop state, there is concern that continuous gear noise may occur in the gear device 51 if minute torque alternately arises in both positive and negative sides.

Therefore, in the present embodiment, when performing heat generation control by d-axis energization, current control is performed to generate torque on one side of the rotational direction of the rotary electric machine 10, ensuring that the absolute value of this torque does not exceed a predetermined value. In this case, it is desirable to generate the alternating current for each phase using the d-axis current and to control the torque using the q-axis current. Specifically, when performing dq/UVW conversion, the control device 40 sets the d-axis current command value Id* to A sin φ, and calculates the q-axis current command value Iq* using the following (Equation 2). Then, the phase current command values Iu*, Iv*, and Iw* are calculated based on the d-axis current command values Id* and q-axis current command values Iq*.

[Math 2]

$$I_q = \frac{T_{offset}}{P_N(\phi+(L_q-L_d)I_d)}\dots \text{(Equation 2)}$$

Note that in (Equation 2), Toffset is the zero-reference torque offset value in the rotary electric machine 10, PN is the number of pole pairs in the rotary electric machine 10, Lq is the q-axis inductance, and Ld is the d-axis inductance.

Fig. 19 is timing charts showing parameter changes when generating q-axis torque during heat generation control by d-axis energization. In Fig. 19, the phase currents flow as shown in the drawing in accordance with the settings for the d-axis current and the q-axis current. In this case, the torque of the rotary electric machine 10 is continuously generated without crossing zero. This causes each gear in the gear device 51 to be held in a state where it is in mesh on one side of the rotational direction, thereby suppressing gear noise from being generated.

In addition, when performing alignment control, it is advisable to set the command angle α to the electrical angle at which gear tooth contact occurs in the gear device 51. Specifically, when performing alignment control using the DC d-axis current, the command angle α is changed by predetermined increments to perform the alignment control. At this time, it is desirable to determine whether the changed command angle α corresponds to the electrical angle at which gear meshing occurs in the gear device 51, based on whether the detected angle of the rotation angle sensor 12 has followed the angular difference between the command angle α before and after the change. n other words, if the detected angle of the rotation angle sensor 12 follows the angular difference between the command angle α before and after the change, it is deemed that no gear mesh has occurred in the gear device 51, and the command angle α is changed again. In addition, if the detected angle of the rotation angle sensor 12 does not follow the angular difference between the command angle α before and after the change, it is deemed that gear meshing of the gear device 51 has occurred, and in this case, the command angle α is set to the electrical angle θ obtained through alignment control.

Note that it is possible that the command angle α, set as the electrical angle at which gear tooth contact occurs, falls outside the predetermined range Ra where the current value of each phase exceeds a specified threshold. In such cases, it is advisable to generate torque in the opposite rotation direction within the rotary electric machine 10 and cause the gears to mesh in the opposite direction.

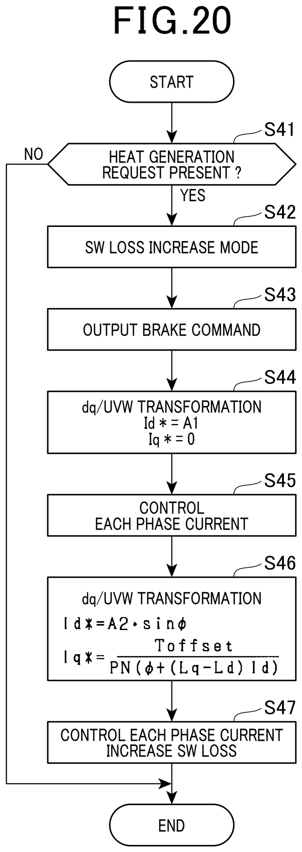

Fig. 20 is a flowchart showing the procedure for heat generation control while the vehicle is stopped. This process may be performed by the control device 40 in place of the process described above in Fig. 15.

In Fig. 20, step S41 determines whether a heat generation request has occurred. For example, if a heat generation request is received from the upper-level control device, step S41 is affirmed. If a heat generation request has occurred, the process proceeds to subsequent step S42, and if no heat generation request has occurred, the process ends.

In step S42, a control mode of the inverter 20 is set to the switching loss increase mode. This enables appropriate control of increased switching losses through the switching control of the inverter 20 while the vehicle is stopped.

In step S43, a brake command is output to stop the rotation of the wheels in the vehicle. In the vehicle, it is desirable for the electric parking brake to be activated in response to the brake command.

Subsequently, in steps S44 and S45, while performing the process to set the command angle α of the rotary electric machine 10 to the electrical angle at which gear tooth contact occurs in the gear device 51, alignment control is performed to adjust the electrical angle of the rotary electric machine 10 to the command angle α using the DC d-axis current.

Specifically, in step S44, the d-axis current command value Id* is set to A1, the q-axis current command value Iq* is set to 0, and the electrical angle θ is set as the command angle α, and the phase current command values Iu*, Iv*, and Iw* are then calculated using the dq/UVW transformation. In the subsequent step S45, switching control is performed for each phase switch 21, 22 based on the phase current command values Iu*, Iv*, Iw* calculated in step S44, thereby controlling the phase current flowing through each phase of the coil 11. At this time, the command angle α is appropriately changed, and if the detected angle of the rotation angle sensor 12 does not follow the change in the alignment control, it is determined that the changed command angle α corresponds to the electrical angle at which gear meshing occurs in the gear device 51.

In other words, according to steps S44 and S45, the command angle α is set as the electrical angle at which gear tooth contact occurs in the gear device 51, and based on this command angle α, the phase current command values Iu*, Iv*, and Iw* for each phase are set. Then, the phase currents are controlled by these phase current command values Iu*, Iv*, and Iw*.

Subsequently, in steps S46 and S47, an AC d-axis current is set as the d-axis current command value Id*, and heat generation control is performed using the AC d-axis current. Specifically, in step S46, the d-axis current command value Id* is set to A2·sinφ, and the q-axis current command value Iq* is set to the value calculated using the above (Equation 2). Then, based on these d-axis current command values Id* and q-axis current command values Iq*, and the command angle α (i.e., the command angle α set as the electrical angle at which gear tooth contact occurs), the phase current command values Iu*, Iv*, and Iw* are calculated by the dq/UVW transformation.

In the subsequent step S47, switching control is performed for each phase switch 21, 22 based on the phase current command values Iu*, Iv*, Iw* calculated in step S46, thereby controlling the phase current flowing through each phase of the coil 11. At this time, the control device 40 simultaneously performs to control the increase in switching losses. The control of the increase in switching losses may be performed in the same manner as step S21 in Fig. 15. In summary, the following processes are performed as appropriate.

- In the drive circuit 24 of the inverter 20, the gate resistors for each switch 21, 22 are switched to gate resistors for increased loss, thereby prolonging the transition time during switch turn-on and turn-off.
- When switching the switches 21 and 22 on and off, set the turn-off time to be longer than the turn-on time.
- Switching is performed only with the upper arm switch 21 of the inverter 20, where switching losses are expected to increase due to on-off switching, while switching is not performed with the lower arm switch 22.

According to steps S46 and S47, torque is generated on one side of the rotational direction of the rotary electric machine 10, and the phase current of each phase is controlled such that this torque does not exceed a predetermined value.

According to the second embodiment described above, in addition to the effects of the first embodiment, the following effects are achieved.

In a configuration where the rotation of the rotor of the rotary electric machine 10 is transmitted to the gear device 51, during current control performed while the vehicle is in a stopped state (when the rotary electric machine 10 is in the rotational stop state), the rotor may rotate in both forward and reverse directions with minimal torque, potentially causing gear noise. Considering this point, current control is performed to generate torque on one side of the rotational direction of the rotary electric machine 10, while ensuring that the absolute value of this torque does not exceed a predetermined value. In this case, it is possible to suppress both the rotation of the rotor of the rotary electric machine 10 and the fluctuation of the torque of the rotary electric machine 10 across zero in both positive and negative sides. This makes it possible to prevent the gear noise from occurring continuously in the gear device 51. In other words, by inducing gear tooth contact in a specific direction within the gear device 51, it is possible to suppress the inconvenience of gear noise from being generated by the gear device 51, which arises due to the alternating generation of minute torque in both positive and negative sides.

When a small torque is applied to the rotary electric machine 10 while it is in the rotational stop state, a brake is activated to suppress the vehicle from moving. This helps prevent inconveniences such as vehicles moving unintentionally.

When performing alignment control using the DC d-axis current, the command angle α is set to the electrical angle at which gear tooth contact occurs in gear device 51, and based on this command angle α, the phase current command values Iu*, Iv*, and Iw* for each phase are set. This allows the gear teeth of the gear device 51 to be pressed against in a specific direction, thereby suppressing the gear noise from being generated.

(Other Embodiments)

The above embodiments may be modified, for example, as follows.

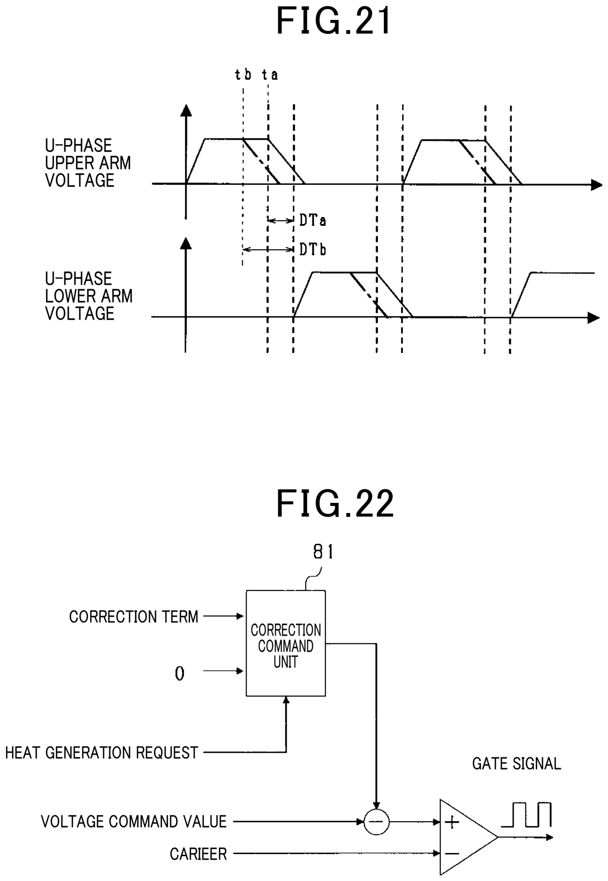

- When extending the turn-off time of each switch 21, 22 by controlling the increase in switching loss, the configuration may also involve extending the dead time beyond the normal duration. For example, as shown by the solid line in Fig. 21, when the turn-off time is set longer than normal, the timing at which each switch 21 and 22 in the upper and lower arms effectively turns off is delayed, raising concerns such as a short circuit between the upper and lower arms. In contrast, as shown by the dashed line in Fig. 21, the timing for turning off the gate signal is advanced, changing from ta to tb. In this case, by advancing the off timing of the gate signal, short circuits between the upper and lower arms are suppressed from occurring even when the turn-off time is prolonged. In Fig. 21, the dead time during normal operation is DTa, whereas the dead time during increased switching losses is DTb.

The control device 40 may perform feedforward control to lower the voltage command value for each phase in advance by an amount equivalent to the turn-off delay when extending the turn-off time to control increased switching losses. For example, as shown in Fig. 22, a correction command unit 81 is provided, and when a heat generation request occurs, the voltage command values for each phase are reduced by applying a feedforward correction term. This allows the dead time to be suitably extended when switching losses increase.
When a heat generation request is detected, extending the dead time compared to when no heat generation request exists suppresses short circuits from occurring between the upper and lower arms, and this is achieved despite the increased switching losses that result in longer switch turn-off times.

- In the first embodiment described above, heat generation control shown in Fig. 15 was configured not to perform switching loss increase control when a DC d-axis current is applied during alignment control (steps S17, S18), however, this may be modified to perform switching loss increase control when a DC d-axis current is applied during alignment control (steps S17, S18).
- In the above embodiments, the inverter 20 performed control to switch the gate resistance of each switch 21, 22 as a configuration (configuration increasing switching loss) where at least one of the turn-on time and turn-off time of each switch 21, 22 is variable, however, this may be modified. For example, the configuration may also be such that the gate applied voltage of each switch 21, 22 is variable. When a heat generation request is occurring, the control device 40 sets the gate voltage to a voltage lower than that during normal operation when heat generation control is not being occurring. This results in prolonged gate charging and discharging times in semiconductor switching elements, leading to increased switching losses.
- In the above embodiments, the configuration for controlling heat generation by energizing the d-axis employed the sinusoidal d-axis current as the AC d-axis current, however, this configuration may be modified to employ a square-wave d-axis current as the AC d-axis current. The AC d-axis current need only flow alternately in both positive and negative sides at regular intervals.
- The present disclosure may also be applied to other moving bodies such as aircraft and vessels, in addition to electric vehicles. It may also be applied to fixed systems.

A control unit and methods described in the present disclosure may be realized by a dedicated computer provided by configuring a processor and memory programmed to perform one or more functions embodied by the computer program. Alternatively, the control device and method described in the present disclosure may be performed by a dedicated computer provided by configuring a processor with one or more dedicated hardware logic circuits. Alternatively, the control device and methods described in the present disclosure may be realized by one or more dedicated computers composed of a processor and memory programmed to perform one or more functions, in combination with a processor composed of one or more hardware logic circuits. In addition, the computer program may also be stored in a computer-readable, non-transitory tangible storage media as instructions to be executed by a computer.
The technical ideas extracted from the above embodiments are described below.

[Configuration 1]

A control device (40) applied to a rotary electric machine system including a rotary electric machine (10) having a polyphase winding (11) and an inverter (20) for adjusting phase current of each phase in the winding, and performing power control of the rotary electric machine using the inverter, the control device including:

a current setting unit that sets phase current command values for each phase of the winding based on an electrical angle of the rotary electric machine and a d-axis current command value and a q-axis current command value of the rotary electric machine,
a current control unit that controls the phase current flowing through each phase based on the phase current command values set by the current setting unit, and
a determination unit that determines a presence or absence of a heat generation request in the rotary electric machine system, wherein
when it is determined that the heat generation request is present and the rotary electric machine is in a rotational stop state, the current setting unit sets an AC d-axis current as the d-axis current command value in order to pass a phase current that alternates on both positive and negative sides through each phase of the winding, and the current setting unit sets the phase current command value based on the AC d-axis current.

[Configuration 2]

The control device for the rotary electric machine system according to configuration 1, wherein

the control device further includes an angle setting unit that sets, as an electrical angle of the rotary electric machine when the rotary electric machine is in the rotational stop state, an electrical angle at which all of the phase currents of the respective phases of the windings are equal to or greater than a predetermined threshold value, and
the current setting unit sets the phase current command values based on the electrical angle set by the angle setting unit.

[Configuration 3]

The control device for the rotary electric machine system according to configuration 1, wherein

the rotation of the rotary electric machine is configured to be transmitted to gears of a gear device (51), and
the current setting unit sets the phase current command values for each phase of the winding such that the rotary electric machine generates torque in one rotation direction and such that the torque does not exceed a predetermined value.

[Configuration 4]

The control device for the rotary electric machine system according to configuration 3, wherein

the rotary electric machine is a power source for movement of a moving body, and
a brake command unit is provided that activates a brake to suppress the moving body from moving when torque is generated in one rotation direction of the rotary electric machine due to the phase current command values set by the current setting unit.

[Configuration 5]

The control device for the rotary electric machine system according to any one of configurations 1 to 4, wherein

when the heat generation request is present and the rotary electric machine is in the rotational stop state,
the current setting unit performs a first setting process in which an electrical angle of the rotary electric machine is set to a predetermined command angle, a DC d-axis current is set as the d-axis current command value, and the phase current command value is set based on the command angle and the DC d-axis current; and a second setting process in which the phase current command value is set based on the command angle and the AC d-axis current, and
the current control unit performs a first current control to control the phase current based on the phase current command value set by the first setting process, and subsequently performs a second current control to control the phase current based on the phase current command value set by the second setting process.

[Configuration 6]

The control device for the rotary electric machine system according to configuration 5, wherein
the current setting unit sets an absolute value of the DC d-axis current to a value greater than an absolute value of the AC d-axis current.

[Configuration 7]

The control device for the rotary electric machine system according to configuration 5 or 6, wherein

an angle setting unit is provided that sets, in the rotational stop state of the rotary electric machine, as the command angle, an electrical angle at which all of the phase currents of the respective phases of the windings are equal to or greater than a predetermined threshold value, and

the current setting unit sets the phase current command value based on the command angle set by the angle setting unit in the first setting process.

[Configuration 8]

The control device for the rotary electric machine system according to any one of configurations 5 to 7, wherein

the rotation of the rotary electric machine is configured to be transmitted to gears of a gear device (51),

the current setting unit, as the first setting process, sets the command angle as an electrical angle at which a gear tooth contact occurs in the gear device, and sets the phase current command value based on that command angle, and

the current setting unit controls, as the first current control, a phase current by the phase current command value set based on the command angle at which the gear tooth contact occurs.

[Configuration 9]

The control device for the rotary electric machine system according to any one of configurations 5 to 8, wherein

the inverter is configured to adjust the phase current in each phase of the winding by turning on and off a plurality of switches (21, 22) composed of semiconductor switching elements,

when it is determined that the heat generation request is present, there is provided a switch control unit that is configured to set the transition time during at least one of the switch turn-on and turn-off operations to a longer duration compared to when the heat generation request is not present, thereby increasing switching losses, and

the current control unit does not control the increase in switching loss by the switch control unit when controlling the phase current by switching the switch on and off in the first current control, and the current control unit controls the increase in switching loss by the switch control unit when controlling the phase current by switching the switch on and off in the second current control.

The present disclosure has been described in accordance with the embodiments, but it should be understood that the present disclosure is not limited to these embodiments or structures. The present disclosure encompasses various modifications and modifications within the scope of equivalents. In addition, various combinations and configurations, as well as other combinations and configurations including only one element, more, or less, are within the scope and scope of the present disclosure.

**Claims**

1. A control device (40) applied to a rotary electric machine system including a rotary electric machine (10) having a polyphase winding (11) and an inverter (20) for adjusting phase current of each phase in the winding, and performing power control of the rotary electric machine using the inverter, the control device comprising:

   a current setting unit that sets phase current command values for each phase of the winding based on an electrical angle of the rotary electric machine and a d-axis current command value and a q-axis current command value of the rotary electric machine,

   a current control unit that controls the phase current flowing through each phase based on the phase current command values set by the current setting unit, and

   a determination unit that determines a presence or absence of a heat generation request in the rotary electric machine system, wherein

   when it is determined that the heat generation request is present and the rotary electric machine is in a rotational stop state, the current setting unit sets an AC d-axis current as the d-axis current command value in order to pass a phase current that alternates on both positive and negative sides through each phase of the winding, and the current setting unit sets the phase current command value based on the AC d-axis current.

**2.** The control device for the rotary electric machine system according to claim 1, wherein

the control device further includes an angle setting unit that sets, as an electrical angle of the rotary electric machine when the rotary electric machine is in the rotational stop state, an electrical angle at which all of the phase currents of the respective phases of the windings are equal to or greater than a predetermined threshold value, and
the current setting unit sets the phase current command values based on the electrical angle set by the angle setting unit.

**3.** The control device for the rotary electric machine system according to claim 1, wherein

the rotation of the rotary electric machine is configured to be transmitted to gears of a gear device (51), and
the current setting unit sets the phase current command values for each phase of the winding such that the rotary electric machine generates torque in one rotation direction and such that the torque does not exceed a predetermined value.

**4.** The control device for the rotary electric machine system according to claim 3, wherein

the rotary electric machine is a power source for movement of a moving body, and
a brake command unit is provided that activates a brake to suppress the moving body from moving when torque is generated in one rotation direction of the rotary electric machine due to the phase current command values set by the current setting unit.

**5.** The control device for the rotary electric machine system according to any one of claims 1 to 4, wherein

when the heat generation request is present and the rotary electric machine is in the rotational stop state,
the current setting unit performs a first setting process in which an electrical angle of the rotary electric machine is set to a predetermined command angle, a DC d-axis current is set as the d-axis current command value, and the phase current command value is set based on the command angle and the DC d-axis current; and a second setting process in which the phase current command value is set based on the command angle and the AC d-axis current, and
the current control unit performs a first current control to control the phase current based on the phase current command value set by the first setting process, and subsequently performs a second current control to control the phase current based on the phase current command value set by the second setting process.

**6.** The control device for the rotary electric machine system according to claim 5, wherein
the current setting unit sets an absolute value of the DC d-axis current to a value greater than an absolute value of the AC d-axis current.

**7.** The control device for the rotary electric machine system according to claim 5, wherein

an angle setting unit is provided that sets, in the rotational stop state of the rotary electric machine, as the command angle, an electrical angle at which all of the phase currents of the respective phases of the windings are equal to or greater than a predetermined threshold value, and
the current setting unit sets the phase current command value based on the command angle set by the angle setting unit in the first setting process.

**8.** The control device for the rotary electric machine system according to claim 5, wherein

the rotation of the rotary electric machine is configured to be transmitted to gears of a gear device (51),
the current setting unit, as the first setting process, sets the command angle as an electrical angle at which a gear tooth contact occurs in the gear device, and sets the phase current command value based on that command angle, and
the current setting unit controls, as the first current control, a phase current by the phase current command value set based on the command angle at which the gear tooth contact occurs.

**9.** The control device for the rotary electric machine system according to claim 5, wherein

the inverter is configured to adjust the phase current in each phase of the winding by turning on and off a plurality of switches (21, 22) composed of semiconductor switching elements,

when it is determined that the heat generation request is present, there is provided a switch control unit that is configured to set the transition time during at least one of the switch turn-on and turn-off operations to a longer duration compared to when the heat generation request is not present, thereby increasing switching losses, and the current control unit does not control the increase in switching loss by the switch control unit when controlling the phase current by switching the switch on and off in the first current control, and the current control unit controls the increase in switching loss by the switch control unit when controlling the phase current by switching the switch on and off in the second current control.

10. A control program applied to a rotary electric machine system including a rotary electric machine (10) having a polyphase winding (11) and an inverter (20) that adjusts the phase current of each phase in the winding, the control program being performed by a control device that performs power control of the rotary electric machine using the inverter, the control program performs:

a current setting process that sets phase current command values for each phase of the winding based on an electrical angle of the rotary electric machine and a d-axis current command value and a q-axis current command value of the rotary electric machine,

a current control process that controls the phase current flowing through each phase based on the phase current command value set by the current setting process, and

a determination process that determines whether a heat generation request is present in the rotary electric machine system, wherein

when it is determined that the heat generation request is present and the rotary electric machine is in a rotational stop state, the current setting unit sets an AC d-axis current as the d-axis current command value in order to pass a phase current that alternates on both positive and negative sides through each phase of the winding, and the current setting unit sets the phase current command value based on the AC d-axis current.

# FIG.1

EP 4 716 092 A1

CONTROL DEVICE

FIG.2

FIG.3A

FIG.3B

FIG.3C

# FIG.4

INCREASED LOSS PERIOD

IGNITION POINT

ELEMENT TEMPERATURE

NORMAL PERIOD

SHORT-CIRCUIT DETECTION TIME

TIME

# FIG.5

$I_d^* = A sin\phi$

$I_q^* = 0$

ELECTRICAL ANGLE $\theta$

71

dq

uvw

$I_u^*$

$I_v^*$

$I_w^*$

# FIG.6

dq-AXIS CURRENT

0

d-AXIS  q-AXIS

PHASE CURRENT

0

U-PHASE  V-PHASE  W-PHASE

# FIG.7A

# FIG.7B

EP 4 716 092 A1

# FIG.8A

# FIG.8B

24

FIG.9A

U-PHASE UPPER ARM GATE VOLTAGE

U-PHASE LOWER ARM GATE VOLTAGE

FIG.9B

U-PHASE UPPER ARM GATE VOLTAGE

U-PHASE LOWER ARM GATE VOLTAGE

X

FIG.9C

U-PHASE UPPER ARM GATE VOLTAGE

U-PHASE LOWER ARM GATE VOLTAGE

# FIG.10

# FIG.11

ELECTRICAL ANGLE [degree]

# FIG.12A  FIG.12B  FIG.12C

MODULATION RATE K = 0.2   MODULATION RATE K = 0.5   MODULATION RATE K = 0.9

CARRIER WAVE   SIGNAL WAVE

# FIG.13A

ALIGNMENT CONTROL

$I_d^* = A1$ ⟶ ┌─────────── 71A
$I_q^* = 0$ ⟶ │ dq
COMMAND ANGLE $\alpha$ ⟶ │ uvw ⟶ $I_u^*$, $I_v^*$, $I_w^*$

# FIG.13B

HEAT GENERATION CONTROL

$I_d^* = A2 \cdot sin\phi$ ⟶ ┌─────────── 71B
$I_q^* = 0$ ⟶ │ dq
COMMAND ANGLE $\alpha$ ⟶ │ uvw ⟶ $I_u^*$, $I_v^*$, $I_w^*$

# FIG.14

# FIG.15

```
                    ┌──────────┐
                    │  START   │
                    └──────────┘
                         │
                         ▼                    S11
      NO    ╱───────────────────────────╲
   ┌────◄──┤   HEAT GENERATION           │
   │       ╲  REQUEST PRESENT ?         ╱
   │        ╲──────────────────────────╱
   │                    │ YES
   │                    ▼                    S12
   │       ┌───────────────────────────┐
   │       │   SW LOSS INCREASE MODE    │
   │       └───────────────────────────┘
   │                    │
   │                    ▼                    S13
   │       ┌───────────────────────────┐
   │       │        ACQUIRE θa          │
   │       └───────────────────────────┘
   │                    │
   │                    ▼                    S14
   │       ╱───────────────────────────╲  NO
   │      ┤   WITHIN PREDETERMINED       ├────────────┐
   │       ╲       RANGE Ra ?           ╱             │
   │        ╲──────────────────────────╱              │
   │                    │ YES                         │
   │                    ▼            S15              ▼            S16
   │       ┌──────────────────────┐     ┌──────────────────────────┐
   │       │      α ← θa           │     │         SET α            │
   │       └──────────────────────┘     └──────────────────────────┘
   │                    │                            │
   │                    ◄───────────────────────────┘
   │                    ▼                    S17
   │       ┌───────────────────────────┐
   │       │  dq/UVW TRANSFORMATION     │
   │       │       Id * = A1            │
   │       │       Iq * = 0             │
   │       └───────────────────────────┘
   │                    │
   │                    ▼                    S18
   │       ┌───────────────────────────┐
   │       │        CONTROL            │
   │       │   EACH PHASE CURRENT      │
   │       └───────────────────────────┘
   │                    │
   │                    ▼                    S19
   │       ┌───────────────────────────┐
   │       │  sq/UVW TRANSFORMATION     │
   │       │     Id * = A2·sinφ         │
   │       │       Iq * = 0             │
   │       └───────────────────────────┘
   │                    │
   │                    ▼                    S20
   │       ┌───────────────────────────┐
   │       │   SET LOSS INCREASE PERIOD │
   │       └───────────────────────────┘
   │                    │
   │                    ▼                    S21
   │       ┌───────────────────────────┐
   │       │ CONTROL EACH PHASE CURRENT │
   │       │     INCREASE SW LOSS       │
   │       └───────────────────────────┘
   │                    │
   └──────────────────► ▼
                    ┌──────────┐
                    │   END    │
                    └──────────┘
```

# FIG.16

```
        START
          |
          v
    ┌─────────────────┐  S31
   <  HEAT GENERATION  >──── NO ──────────┐
    < REQUEST PRESENT ? >                  |
    └─────────────────┘                    |
          | YES                            |
          v                                |
    ┌─────────────────┐  S34               |
   <  SW ON TIME > TD ? >──── NO ─────┐    |
    └─────────────────┘                |    |
          | YES                        |    |
          v                            v    v
  ┌──────────────────────┐ S35   ┌──────────────────┐ S32
  │ SW LOSS INCREASE MODE│       │   NORMAL MODE    │
  └──────────────────────┘       └──────────────────┘
          |                            |
          v                            v
  ┌──────────────────────┐ S36   ┌──────────────────┐ S33
  │      ACQUIRE         │       │    SW CONTROL    │
  │ ELEMENT TEMPERATURE  │       └──────────────────┘
  └──────────────────────┘            |
          |                           |
          v                           |
  ┌──────────────────────────┐ S37    |
  │ SET LOSS INCREASE PERIOD │        |
  └──────────────────────────┘        |
          |                           |
          v                           |
  ┌──────────────────────┐ S38        |
  │      SW CONTROL      │            |
  └──────────────────────┘            |
          |                           |
          v<──────────────────────────┘
        END
```

# FIG.17

# FIG.18

# FIG.19

# FIG.20

```
          ┌─────────────┐
          │    START    │
          └──────┬──────┘
                 │                        ╭─ S41
         NO  ╱───┴──────────────╲
        ◄───┤  HEAT GENERATION   ├
            ╲  REQUEST PRESENT ? ╱
             ╲──────┬───────────╱
                    │ YES
                    │                     ╭─ S42
          ┌─────────┴─────────────┐
          │  SW LOSS INCREASE MODE │
          └─────────┬─────────────┘
                    │                     ╭─ S43
          ┌─────────┴─────────────┐
          │  OUTPUT BRAKE COMMAND  │
          └─────────┬─────────────┘
                    │                     ╭─ S44
          ┌─────────┴─────────────┐
          │ dq/UVW TRANSFORMATION  │
          │      Id∗ = A1          │
          │      Iq∗ = 0           │
          └─────────┬─────────────┘
                    │                     ╭─ S45
          ┌─────────┴─────────────┐
          │        CONTROL         │
          │  EACH PHASE CURRENT    │
          └─────────┬─────────────┘
                    │                     ╭─ S46
          ┌─────────┴─────────────┐
          │ dq/UVW TRANSFORMATION  │
          │                        │
          └─────────┬─────────────┘
                    │                     ╭─ S47
          ┌─────────┴─────────────┐
          │ CONTROL EACH PHASE CURRENT │
          │     INCREASE SW LOSS   │
          └─────────┬─────────────┘
                    │
          ┌─────────┴─────────────┐
          │          END          │
          └───────────────────────┘
```

Step S46:
$$Id∗ = A2 \cdot \sin\phi$$
$$Iq∗ = \frac{Toffset}{PN(\phi + (Lq - Ld)Id)}$$

# FIG.21

tb ta

U-PHASE
UPPER ARM
VOLTAGE

DTa
DTb

U-PHASE
LOWER ARM
VOLTAGE

# FIG.22

81

CORRECTION TERM →

CORRECTION
COMMAND
UNIT

0 →

HEAT GENERATION REQUEST →

VOLTAGE COMMAND VALUE →

CARIEER →

GATE SIGNAL

## INTERNATIONAL SEARCH REPORT

| International application No. |
|---|
| **PCT/JP2024/015931** |

| A. | CLASSIFICATION OF SUBJECT MATTER |
|---|---|

*H02P 21/22*(2016.01)i
FI:   H02P21/22 ZHV

According to International Patent Classification (IPC) or to both national classification and IPC

| B. | FIELDS SEARCHED |
|---|---|

Minimum documentation searched (classification system followed by classification symbols)

H02P21/22

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2012-186917 A (FUJITSU TEN LTD.) 27 September 2012 (2012-09-27) paragraphs [0001]-[0100], fig. 1-9 | 1-10 |
| A | JP 2016-86502 A (DENSO CORPORATION) 19 May 2016 (2016-05-19) paragraphs [0001]-[0098], fig. 1-18 | 1-10 |
| A | JP 2021-141747 A (KABUSHIKI KAISHA TOYOTA JIDOSHOKKI) 16 September 2021 (2021-09-16) paragraphs [0001]-[0071], fig. 1-16 | 1-10 |
| A | JP 2021-93845 A (SOKEN INC.) 17 June 2021 (2021-06-17) paragraphs [0001]-[0079], fig. 1-13 | 1-10 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 June 2024** | **25 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/015931**

| Patent document cited in search report | | | Publication date (day/month/year) | Patent family member(s) | | | Publication date (day/month/year) |
|---|---|---|---|---|---|---|---|
| JP | 2012-186917 | A | 27 September 2012 | (Family: none) | | | |
| JP | 2016-86502 | A | 19 May 2016 | US | 2016/0118923 | A1 | |
| | | | | paragraphs [0001]-[0171], fig. 1-18 | | | |
| | | | | DE | 102015220733 | A1 | |
| | | | | CN | 105553210 | A | |
| JP | 2021-141747 | A | 16 September 2021 | US | 2021/0281201 | A1 | |
| | | | | paragraphs [0001]-[0095], fig. 1-16 | | | |
| | | | | DE | 102021201765 | A1 | |
| | | | | CN | 113364383 | A | |
| JP | 2021-93845 | A | 17 June 2021 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023080089 A
- JP 5849917 B